(19) Europäisches Patentamt
European Patent Office
Office européen des brevets

(11) **EP 2 917 515 B1**

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **13795160.4**

(22) Anmeldetag: **08.11.2013**

(51) Internationale Patentklassifikation (IPC):
***F01K 25/06*** *(2006.01)*

(52) Gemeinsame Patentklassifikation (CPC):
**F01K 25/065; F28D 20/003;** Y02E 60/14;
Y02E 70/30

(86) Internationale Anmeldenummer:
**PCT/EP2013/003377**

(87) Internationale Veröffentlichungsnummer:
**WO 2014/072068 (15.05.2014 Gazette 2014/20)**

(54) **VERFAHREN ZUR UMWANDLUNG UND SPEICHERUNG VON ENERGIE**

METHOD FOR CONVERTING AND STORING ENERGY

PROCÉDÉ DE CONVERSION ET D'ACCUMULATION D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.11.2012 DE 102012021909**
**19.04.2013 DE 102013006725**
**13.09.2013 DE 102013015137**

(43) Veröffentlichungstag der Anmeldung:
**16.09.2015 Patentblatt 2015/38**

(73) Patentinhaber: **bw-energiesysteme GmbH**
**15526 Bad Saarow (DE)**

(72) Erfinder: **WOLF, Bodo, M.**
**87719 Mindelheim (DE)**

(74) Vertreter: **Zellentin & Partner mbB Patentanwälte**
**Rubensstraße 30**
**67061 Ludwigshafen (DE)**

(56) Entgegenhaltungen:
**DE-A1-102010 046 584 DE-C- 24 993**

**Beschreibung**

Die Erfindung betrifft ein Verfahren zur Umwandlung und Speicherung von Energie, wie Elektroenergie und/oder Wärme, und/oder Wasser, insbesondere zur Umwandlung von solar-regenerativer Energie und/oder Abwärme aus der Energieumwandlung, z.B. aus Motor- und Gasturbinenkraftwerken sowie Industrieanlagen und Dampfkraftanlagen, und -anwendung in chemische und physikalische Energie, deren Speicherung und geregelte (Rück)Umwandlung in Form von technischer Arbeit oder Elektroenergie, Heiz- und/oder Prozesswärme und/oder die Gewinnung von Kondensat aus Salz- und Abwasser. Anspruch 1 beschreibt das Verfahren gemäß der Erfindung und Anspruch 15 beschreibt die Vorrichtung gemäß der Erfindung.

Das Einsatzgebiet der Erfindung ist die Energie- und/oder Trinkwasserversorgung in Kommunen, Industrie, Gewerbe und im Verkehrswesen sowie die Mobilität mit Verbrennungsmotoren mit großer Leistung und Turbinen, vorzugsweise im Schienen- und Schiffsverkehr.

Die Hauptaufgabe der Energieversorgung im 21. Jahrhundert ist die Ablösung der fossilen und atomaren Brennstoffe durch solar-regenerative Energie. Der Begriff "solar-regenerative Energie" soll vorliegend zur Abgrenzung von fossilen und atomaren Brennstoffen dienen, da derzeit auch wiederaufbereitete atomare Brennstoffe in einigen Fällen als "regenerative" Energie bezeichnet werden. Die bekanntesten Anlagen zur Umwandlung von solar-regenerativer Energie in Elektroenergie sind derzeit Photovoltaik-, Wind- und Wasserkraftanlagen. In Rahmen der vorliegenden Anmeldung sind die Begriffe solar-regenerative Energie und regenerative Energie synonym im Sinne der obigen Abgrenzung eingesetzt. Die Realisierung dieser Substitution wird beim Stand der Technik durch unzureichende Technologien für die Energiespeicherung erschwert, obwohl es eine Vielzahl von technischen Lösungen und Vorschlägen gibt.

Die Notwendigkeit der Energiespeicherung in der heutigen Energiewirtschaft ergibt sich aus dem Verhalten der Energieabnehmer, was sich trotz aller Bemühungen auch in Zukunft nicht wesentlich ändern wird.

Gelöst wurde die Aufgabe der Energiespeicherung bisher im Wesentlichen durch Speicherung fossiler und atomarer Brennstoffe vor der Energieumwandlung und -anwendung und in ihrer Leistung regelbare Energieumwandlungsverfahren, die überdimensioniert dem Lastgang (auch Lastprofil oder Lastkurve), d.h. dem zeitlichen Verlauf der abgenommenen Leistung (z. B. der elektrischen Leistung oder der Gas-Leistung) über eine zeitliche Periode, der Energieversorgungssysteme folgen können.

Energiespeicher zwischen der Umwandlung der fossilen und atomaren Brennstoffe und den Energieabnehmern, wie Pumpspeicherwerke, Wärmespeicher sowie elektrische Akkumulatoren und Batterien, haben gegenwärtig untergeordnete Bedeutung.

Da die zukünftig bedeutenden Energiequellen der solar-regenerativen Energiewirtschaft, wie insbesondere Sonnenstrahlung und Windenergie, nur zeitweise zur Verfügung stehen und nicht gespeichert werden können, werden Speichermethoden, die zwischen der Umwandlung solar-regenerativer Energie in Elektroenergie und den Energieabnehmern angeordnet sind, das zukünftige Energieversorgungssystem bestimmen.

Daneben gilt es jedoch auch Möglichkeiten für die Speicherung temporärer Überkapazitäten der konventionellen, d.h. mit Brennstoffen, wie Kohle, Gas, einschließlich Erd- und Biogas, oder atomaren Brennstoffen, betriebenen Energiewirtschaft zu schaffen.

Beim Stand der Technik stehen dafür, insbesondere in Bezug auf die Kosten, Leistungsfähigkeit und Verfügbarkeit, Verfahren und Technologien zur Verfügung, die die Aufgabe nicht zufriedenstellend erfüllen können. Das Dokument DE102010046584 A1 betrifft reine Kraftprozesse unter Wärmezufuhr, die zum Teil als technische Arbeit und zum anderen Teil als Energie an die Umwelt abgegeben werden muss.

Eine Ursache ist, dass bei der Speicherung von Wärme neben der Exergie auch Anergie gespeichert werden muss, was spezifisch niedrige Speicherarbeit und damit große Speicher zur Folge hat, wie z.B. bei Druckluftspeichern, die letztlich auch fühlbare Wärme speichern, damit das aufgebaute Druckgefälle der Luft effektiv genutzt werden kann.

Die Folge ist, dass der Ausbau der regenerativen Energie eingeschränkt wird und sowohl konventionelle Kraftwerke als auch Wind- und Photovoltaikkraftwerke unter Inkaufnahme ökonomischer Verluste zur Vermeidung von Netzüberlastungen abgeschaltet werden.

Die höchste Form der Exergiespeicherung kann durch Umwandlung von regenerativer Energie in chemische Energieträger, z.B. Kohlenwasserstoffe, wie Methan, Benzin, Kerosin, Diesel- und Heizöl, sowie Alkohole, wie Methanol und Ethanol, die kompatibel zur Infrastruktur sind, erreicht werden, wie sie z.B. in der PCT/EP 2007/005706 beschrieben wird. Demgegenüber ist die Speicherung von regenerativer Energie in Form von reinem Wasserstoff als Generallösung unzweckmäßig. Sie erfordert eine neue Infrastruktur bei niedrigem Rückgewinnungsgrad. Die chemische Anbindung von Wasserstoff an Kohlenstoff ist grundsätzlich die effektivste Methode zur Speicherung von Wasserstoff. So sind in 1 m$^3$ Diesel 1200 m$^3$ Wasserstoff bei Umgebungsdruck stabil gebunden und nach der PCT/EP 2007/005706 können solche Verfahren bei Verwendung von Kohlendioxid als Kohlenstofflieferant einen Rückgewinnungsgrad von bis zu 70 % erreichen.

Die wahrscheinlich bekannteste Methode der Exergiespeicherung sind die Pumpspeicherwerke, die pro m$^3$ Wasser bei einer Fallhöhe von 400 m eine elektrische Arbeit von ca. 1 kWh/m$^3$ Wasser verrichten können. Die Nachteile dieser Methode sind, dass nicht überall Standorte für Pumpspeicherkraftwerke gegeben sind sowie der hohe Erschließungsaufwand und die drastischen Eingriffe in die Natur.

Dieser Mangel wurde mit der EP 2 067 942 behoben, indem die Volumenänderung bei der isothermen Wandlung des Aggregatzustandes des Kohlendioxides bei Umgebungstemperatur für den Aufbau einer Druckdifferenz zum Umgebungsdruck genutzt wird. Der Vorteil dieser Methode ist die Standortunabhängigkeit. Nachteilig ist der hohe Materialaufwand für die Speicherung des Wassers unter Druck, bezogen auf das Arbeitsvermögen des gespeicherten Wassers, das bei Nutzung von Umgebungswärme für die Verdampfung und Kondensation des Kohlendioxides ebenfalls mit 1 kWh/m$^3$ Wasser angegeben werden kann.

Die Zielstellung der vorliegenden Erfindung ist deshalb eine standortunabhängige Technologie zur Umwandlung und Speicherung von Energie, wie Elektroenergie und/oder Wärme, und/oder Wasser, die vorzugsweise anstelle von fossilen und atomaren Brennstoffen mit solar-regenerativer Energie und/oder Abwärme, darunter ggfs. auch Abwärme aus der Energieumwandlung aus fossilen und atomaren Brennstoffen, bevorzugt jedoch Abwärme aus der Energieumwandlung solar-regenerativer Energie, einschließlich aus Wärmepumpen betrieben werden kann und es ermöglicht, den Materialaufwand und die Kapazitätsreserven signifikant zu reduzieren.

Bekannt ist das deutsche Patent Nummer 24 993 vom 8.5.1883 von Moritz Honigmann mit dem Titel "Verfahren zur Entwicklung gespannten Dampfes durch Absorbtion des abgehenden Maschinendampfes in Ätznatron oder Ätzkali". Das Arbeitsvermögen des Wassers je m$^3$ erreicht bei diesem Verfahren über 600 kWh thermisch und in Form von technischer Arbeit damals bereits 50 kWh.

Honigmann nutzt für den Betrieb einer feuerlosen Lok die Tatsache, dass die Siedetemperaturen dieser Laugen über der des Wassers liegen und mit zunehmender Konzentration der wässrigen Lösung steigen und dass solche Lösungen Wasserdampf unter Freisetzung von Wärme absorbieren und durch Wärmezuführung unter Freisetzung von Wasserdampf desorbieren.

Die Lokomotiven bzw. Dampfmaschinen nach Honigmann hatten zwei Kessel, einen für angereicherte, heiße Lauge und einen für Wasser. Die heiße Lauge gab an den Dampfkessel fühlbare Wärme unter Bildung von unter im Druck erhöhtem Wasserdampf ab, der nach verrichteter technischer Arbeit in einer Expansionsmaschine in die Lauge geleitet und dort unter Abgabe von Wärme absorbiert wurde, die an den Dampfkessel abgeführt wurde, was die Dampfproduktion steigerte und die Lösung abmagerte.

Aufgeladen wurde die Lok durch eine konventionelle stationäre Feuerung mit fossilen Brennstoffen, die die Desorbtionswärme lieferte und die Lauge wieder anreicherte, bevor diese mit hoher Temperatur wieder in den Lokkessel gefüllt wurde. Die Lok bzw. Dampfmaschine nach Honigmann wurde also zyklisch im Batch-Betrieb gefahren und die über den Zyklus permanent sinkende Arbeitsfähigkeit des Dampfes ermöglichte lediglich die kurzzeitige Nutzung eines kleinen Gefälles der Konzentration der Lauge.

Aus dem von Z. Rant erarbeiten Zustandsdiagramm des Systems NaOH/H$_2$O lässt sich ablesen, dass die wässrige Lösung der Natronlauge oberhalb eines Wasserdampfdruckes von 0,025 bar, was einer Siedetemperatur des Wassers von etwas über 25 °C und im Konzentrationsbereich der Natronlauge von 0 bis 0,75 in kg/kg und einer Siedebandbreite der Lauge von 25 bis 85 °C, ohne Feststoffbildung desorbiert und absorbiert und bei unterschiedlichen Dampfdrücken betrieben werden kann. Daraus ergibt sich z.B., dass das von der ETH Zürich verfolgte Konzept, Erdreich als Wärmequelle für die Bereitstellung von Absorbtionsdampf zu nutzen, nur bedingt geeignet ist.

Die Nachteile des Standes der Technik zeigten, dass für die Lösung der gestellten Aufgabe eine weitergehende Analyse vorliegender wissenschaftlicher Arbeiten über das thermodynamische Verhalten verschiedener geeigneter Stoffpaare (Lauge/Wasser), insbesondere Metallhydroxide/Wasser, wie die wässrigen Lösungen der Hydroxide des Natriums und des Kalziums sowie des Lithium-Bromits, und die Ableitung von zweckmäßigen Arbeitsdiagrammen über das Siedeverhalten der Laugen in Bezug auf Druck und Temperatur in Abhängigkeit von ihrer Konzentration erforderlich wurden.

Darüber hinaus ist für einen über Umgebungstemperatur betriebenen Kreisprozess mit (Natron)Lauge und Wasser charakteristisch, dass nur Exergie ein- und ausgekoppelt werden kann. Wird dem System an einer Stelle permanent oder einmalig Stoff entnommen, muss dieser an anderer Stelle dem Kreisprozess wieder zugeführt werden, sonst kommt der Prozess zum Erliegen und sein Zyklus ändert sich. Weiterhin ist charakteristisch, dass die Lauge durch Zugabe von Wasser unter Abgabe von Wärme verdünnt, aber eine Anreicherung der Konzentration nur über Abführung von Wasserdampf erreicht werden kann.

Die grundsätzliche Aufgabe dieser Erfindung besteht darin, eine Umwandlungs- und Speichermethode vorzuschlagen, die einen dauerhaft kontinuierlichen und bedarfsgerechten (d.h. gemäß dem zeitlichen Verlauf der abgenommenen Leistung (z. B. der elektrischen Leistung oder der WärmeLeistung) über eine zeitliche Periode) Kraftwerksbetrieb ermöglicht, der mit oder ohne Auskopplung von Heiz- oder Prozesswärme und/oder Einkopplung von (solar-regenerativer) Energie und/oder Abwärme, aber insbesondere ohne fossile und atomare Brennstoffe, arbeitet kann und gekennzeichnet ist durch einen hohen Rückgewinnungsgrad sowie ein hohes spezifisches Arbeitsvermögen der als Energieträger verwendeten Arbeitsmittel, und deren Speicherfähigkeit unter Umgebungsdruck.

Dafür schlägt die Erfindung einen Sorbtionsprozess (im folgenden auch: Laugekreisprozess) mit dem Stoffpaar Lauge/Wasser, vorzugsweise Metallhydroxid/Wasser, insbesondere Natronlauge, vor, bei dem Überschussenergie für die Desorbtion direkt oder indirekt über Wärmeträger eingesetzt wird und die Energierückgewinnung zeitversetzt durch Absorbtion erfolgt, wobei

- mehrere Desorbtionstufen laugeseitig parallel oder hintereinander und druckseitig im Temperaturniveau hintereinander so geschalteten sind, dass jede Stufe unter Nutzung der Kondensationswärme des Desorbtiosdampfes der vorgeschalteten Desobrbtionsstufe die Konzentration der Lauge weiter steigert,
- die Energierückgewinnung durch rekuperative Übertragung von Absorbtionswärme an unter erhöhtem Druck stehende Lauge oder Kraftprozessarbeitsmittel erfolgt, die durch Absorbtion von Flash-, Entnahme- oder Gegendruckwasserdampf sowie internem und externem Dampf freigesetzt und
- das durch Zuführung von Absortionswärme in der Temperatur erhöhte, gegebenenfalls nach Flashverdampfung, dampfförmige Arbeitsmittel unter Abgabe von technischer Arbeit expandiert und der danach vorliegende Wasserdampf der Lauge wieder zugeführt wird.

Als Lauge im Sinne der vorliegenden Erfindung gelten Verbindungen, welche die Eigenschaft haben Wasser(dampf) weitgehend reversibel zu absorbieren und zu desorbieren, wie Metallhydroxide oder Metallsalze vorzugsweise in Form wässriger Lösungen, vorzugsweise wässrige Erdalkali- oder Alkalimetallhydroxid- oder -halogenidlösungen, insbesondere wässrige Natriumhydroxid-, Kaliumhydroxid- oder Lithiumbromidlösungen.

Gegenstand der Erfindung ist somit ein Verfahren zur Umwandlung und Speicherung von Energie, und deren bedarfsgerechte (d.h. gemäß Lastgang) Rückgewinnung in Kraft-, Heiz- und Heiz-Kraft-Werken über Wasserdampf-Sorptionsprozesse mit Laugen, insbesondere Metallhydroxiden/-salzen, vorzugsweise Natronlauge, gemäß Anspruch 1. Bevorzugte Ausgestaltungen des Verfahrens sind in den abhängigen Ansprüchen angegeben.

Die vorgenannte erfindungsgemäße Verfahrensführung, einschließlich deren bevorzugte Ausgestaltungen, werden im Weiteren auch als "erfindungemäße zeitversetzte kontinuierliche Absorbtion und Desorbtion von Wasserdampf' bezeichnet.

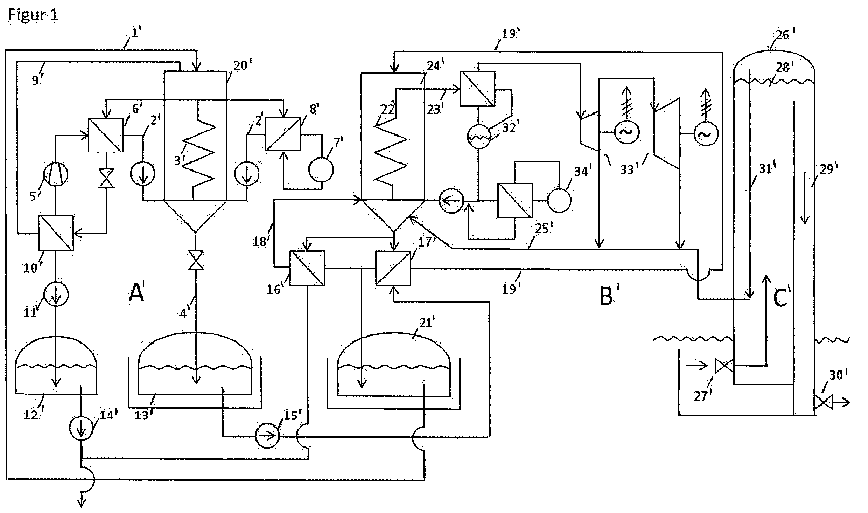

Erfindungsgemäß wird die thermodynamische Grunderkenntniss, dass die geringsten Exergieverluste bei der Wärmeübertragung durch gegenläufige Zustandsänderungen und geringe mittleren Temperaturdifferenzen bei der Desorbtion als auch der Absorbtion erreicht werden, genutzt. Auf Grund des isobaren Siedeverhaltens der Lauge ist dementsprechend, wie beispielhaft in Figur 1 gezeigt, die rekuperative Übertragung von Wärme von einem Energieträger, z.B. Druckwasser oder transkritischem Kohlendioxid, bei der Desorbtion an die Lauge bzw. die Übertragung der Wärme an solche Energieträger bei der Absorbtion vorteilhaft.

Erfindungsgemäß wird das z.B. erreicht, indem -wie beipielhaft in Figur 1 gezeigt- einer Lauge mit niederer Konzentration, z.B. 0,40 kg NaOH/kg Lauge, die fühlbare Wärme eines Wärmeträgers, vorzugsweise eines Wärmepumpenarbeitsmittels unter transkritischen Bedingungen, z.B. Kohlendioxid, in einer primären Desorbtion über eine oder mehrer Druckstufen rekuperativ so übertragen wird, dass nach der Desorbtion von Wasserdampf z.B. eine Konzentration von 0,52 kg NaOH/kg Lauge unter einem Desorbtionsdruck erreicht wird, der rekuperative Übertragung der Kondensationswärme des Desorbtionsmittels an ein Wärmepumpenarbeitsmittel, beispielsweise bei einem Dampfdruck von 0,01 bar, ermöglicht. Wobei das Wärmepumpenarbeitsmittel sich z.B. in einer ersten Desorbtionsstufe von 90 auf 70 °C abkühlt und in nachfolgenden Desorbtionsstufen eine weitere Auskühlung, erfindungsgemäß durch weitere Desobtion von Lauge, beispielsweise im gleichen Konzentrationsbereich, in einer zweiten und dritten primären Desorbtionsstufe unter Desorbtiondrücken von 0,04 bzw. 0.01 bar weiter abkühlt.

Dabei ist es erfindungsgemäß, die Desorbtionsdämpfe aus der ersten und zweiten Desorbtionsstufe für die Beheizung sekundärer Desorbtionstufen, die gekennzeichnet sind durch rekuperative Übertragung der Kondensationswärme der Desorbtionsdämpfe, zu verwenden, während die Kondensationswärme der unter einem Druck von 0,01 bar anfallenden primäre und sekundären Desorbtionsdämpfe, erfindungsgemäß zum Zwecke der Verdampfung, rekuperativ an ein externes Wärmepumpenarbeitsmittel, einen Wärmespeicher, einen Wärmeträger, z.B. einen Druckwasserkreislauf, oder die Umgebung abgeführt wird.

Die Bereitstellung der Desorbtionswärme durch ein Wärmepumpenarbeitsmittel, z.B. Kohlendioxid unter transkritischem Zustand, beschränkt beim Stand der Technik die Arbeitstemperatur des Sorptionsprozesses auf unter 150 °C.

Erfindungsgemäß wird deshalb auch vorgeschlagen Druckwasser und/oder Wasserdampf aus der Desorbtion und Absorbtion als Arbeitsmittel zur Beheizung der Desorbtion und Energierückgewinnung durch Expansion einzusetzen, indem einerseits Desorbtionsdampf durch Kompression im Energieniveau angehoben und andererseits in der Absorbtion rekuperativ erzeugter und im Druck aufgeladener Dampf mit höherem Energienivau unter Abgabe technischer Arbeit expandiert wird, bevor dieser unter erhöhter Temperatur von der Lauge absorbiert wird.

Wesentlich im Rahmen der vorliegenden Erfindung ist, dass in einem Laugekreisprozess keine chemische Energie durch Stoffumwandlung freigesetzt wird, sodass nur die Bindungsenergie zwischen Lauge, wie Metallhydroxid/-salz, und Wasser für technische Arbeit zur Verfügung steht. Diese Bindungsenergie, die isobaren Siedetemperaturen und der Carnot-Wirkungsgrad steigen mit zunehmender Konzentration der Lauge. Daraus ergibt sich bei Laugen auch die Möglichkeit, die bei höherer Konzentration durch Absorbtion freigesetzte Wärme rekuperativ an eine Desorbtion bei niedrigerer Konzentration oder an Wasser zu übertragen und so Wasserdampf mit gegenüber der Absorbtion höherem Druck freizusetzen, der nach Verrichtung von technischer Arbeit als Absorbtionsdampf verwendet werden kann.

Berechnungen der Stoff- und Energiebilanzen unter Nutzung von prozessinternem Wasserdampf im Rahmen der vorliegenden Erfindung haben gezeigt, dass bei der Auslegung von technischen Anlagen der Zusammenhang zwischen Energieumsatz ($\Delta H$), spezifischer Enthalpiedifferenz ($\Delta h$) und Massestrom des Wasserdampfes ($m^*$) entsprechend

$$\Delta H = \Delta h \times m^*$$

unterschiedliche Dampfmasseströme in der Desorbtion und Absorbtion zur Folge hat, was zu beachten ist.

Am Beispiel der spezifischen Enthalpiedifferenz $\Delta h$ des Dampfkreislaufes lässt sich zeigen, dass entsprechend

$$m^* = \Delta H : \Delta h$$

die Änderung des Dampfzustandes eine Anpassung des Dampfmassestromes durch Zu- oder Abführung von Wasserdampf in Abhängigkeit von der spezifischen Enthalpiedifferenz des Dampfes aus bzw. in den Laugekreisprozess erfordert.

Daraus ergibt sich, dass im Zuge der erfindungsgemäß stufenweisen Desorbtion die spezifische Enthalpie des Desorbtionsdampfes sinkt, sodass mehr Desorbtionsdampf produziert wird als für den Transport der Desorbtionswärme erforderlich ist, das hat zur Folge, dass nur ein Teil des Desorbtionsdampfes als Kreislaufdampf genutzt werden kann und der Rest einer weiteren Nutzung als Heizdampf für eine nachgeschaltete Desorbtion oder Heizwärmeversorgung bzw. einer technische Arbeit leistenden Expansion zugeführt werden kann.

Bei der erfindungsgemäßen stufenweise Absorbtion steigt dagegen die spezifische Enthalpie des durch rekuperative Übertragung der Absorbtionswärme erzeugten Dampfes, so dass zur Sicherung der Stoffbilanz des Laugekreisprozesses Dampf aus der Desorbtion oder exterenen Quellen, wie Dampfkesseln, Kühl- und Umgebungswasser, Heizwärmerücklauf oder Wärmespeichern, die vorzugsweise mit Desorbtionsdampf geheizt werden, zugeführt werden muss.

Gefunden wurde, dass es erfindungsgemäß vorteilhaft ist, dass Desorbtion und Absorbtion über den gleichen Konzentrationsbereich arbeiten, d.h. die Produkte der Desorbtion sind die Einsatzstoffe für die Absorbtion und umgekehrt.

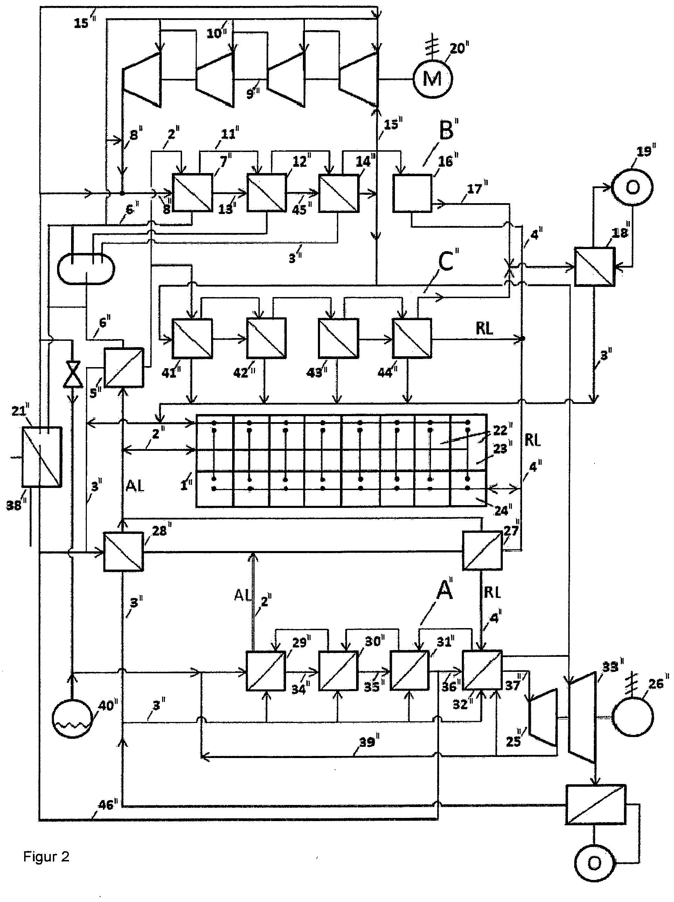

Einen erfindungsgemäß speziellen Lösungsvorschlag für den Betrieb eines entsprechenden Verfahrens mit Elektroenergie über eine mehrstufige Verdichtung von Kreislaufdampf zeigt beispielhaft Figur 2, bei dem die (externe) Energiezufuhr nur über die erste Desorbtionsstufe erfolgt, während die nachfolgenden Desorbtionsstufen mit der Kondensationswärme des Desorbtionsdampfes der jeweils vorherigen Stufe beheizt werden und jede der nachfolgenden Desorbtionsstufen zu einer höheren Konzentration der Lauge führt. Die Einkopplung der für die Desorbtion erforderlichen Energie erfolgt hier, indem der Desorbtion zwischen den Desorbtionsstufen Dampf entnommen und unter Verwendung von externer Energie, vorzugsweise regenerative Elektroenergie, durch Kompressionsarbeit im Druckniveau erhöht und danach unter Nutzung seiner fühlbaren Wärme und seiner Kondensationswärme zur Beheizung der erste Desorbtionsstufe eingesetzt wird.

Erfindungsgemäß erfolgt die Rückgewinnung der dem Sorbtionsprozess zugeführten Energie, indem der durch Desorbtion angereicherten Lauge Wasserdampf zugeführt wird und die dabei frei werdende Absorbtionswärme rekuperativ an einen Energieträger/Wärmeträger, z.B. Wasser, Kohlendioxid oder Thermoöl, ohne Phasenwechsel oder an Wasser, Kohlendioxid oder andere Kältemittel zum Zwecke der Dampferzeugung übertragen wird.

Die Minimierung der Exergieverluste in der Desorbtion und Absorbtion sowie der Flashverdampfung im praktischen Betrieb, selbst bei Beheizung der ersten Desorbtionsstufe durch eine leistungsfähige Wärmepumpe, die Desorbtionsdampf als Arbeitsmittel oder die Kondensationswärme des Desorbtionsdampfes als Wärmequelle nutzt, bergen weiteres Potential zur Optimierung der Ausbeute an rückgewinnbarer Energie.

Die Erfindung schlägt daher weiterhin vor, den Stand der Technik bei Anwendung von Laugen, vorzugsweise Natronlauge, nunmehr als Arbeitsmittel in der Kraft- und Heizwerkstechnik einzusetzen, und somit, insbesondere durch Verwendung regenerativer Energie das Niveau einer "feuerlosen" Speicher-Heiz-Kraftwerks-Technik zu begründen.

Damit ermöglicht die Erfindung insbesondere konventionellen Dampfkraftprozessen regenerative Energie aufzunehmen und bedarfsgerecht als Speicher-Kraft- und/oder Speicher-Kraft-Wärme-Prozess zu arbeiten.

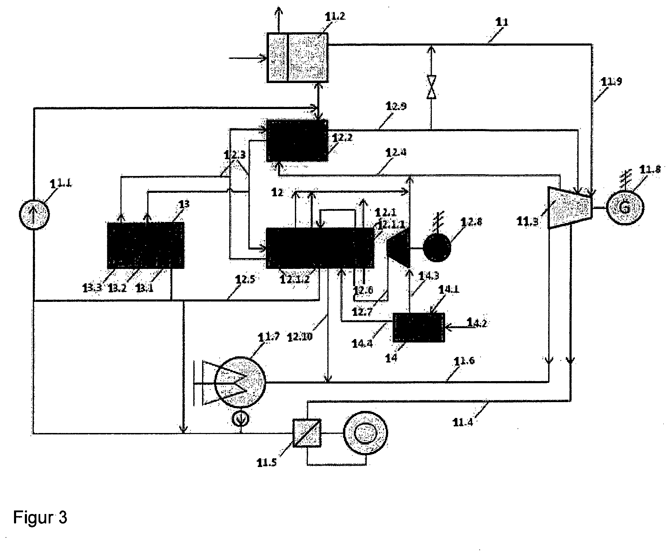

Die primäre und sekundäre Desorbtion werden hier erfindungsgemäß, wie beispielhaft in Figur 3 gezeigt, über mehrere hintereinander geschaltete Druckstufen durchgeführt, wobei die Druckstufen der primären Desorbtion zu denen der sekundären Desorbtion in Reihe oder parallel geschaltet sind und vorzugsweise durch die fühlbare Wärme der Wärmeträger oder des komprimiertem Dampfes beheizt werden, während die Stufen der sekundären Desorbtion durch Kondensation des Desorbtionsdampfes aus der primären Desorbtion und der jeweils vorgeschalteten sekundären Desorbtionsstufe betrieben werden.

Beide Kreisprozesse, d.h. der Kraft-, Wärme- oder Kraft-Wärme-Prozess und der Laugekreisprozess werden erfindungsgemäß so verbunden, dass einerseits durch Absorbtionswärme im Laugekreisprozess erzeugter und im Druck erhöhter Dampf vor einer Einrichtung zum Zwecke der Verrichtung technischer Arbeit, wie z.B. einer Kraftmaschine, z.B. Dampfturbine oder Dampfmotor, in den Kraft-, Wärme- oder Kraft-Wärme-Prozess eingebunden und andererseits die für die Wiederanreicherung der Lauge erforderliche externe Wärmeenergie dem Kraft-, Wärme- oder Kraft-Wärme-Prozess entnommen und der Desorbtion im Laugekreisprozess direkt und/oder über Wärmeträger als fühlbare Wärme, z.B. von Abgas, Kühlwasser, Elektroenergie, komprimiertem Dampf usw. bereitgestellt wird.

Weiterer Gegenstand der Erfindung ist daher ein Verfahren zur Umwandlung und Speicherung von Energie, und deren bedarfsgerechte Rückgewinnung in Kraft-, Heiz- und Heiz-Kraft-Werken über Wasserdampf-Sorptionsprozesse mit Laugen, z.B. Metallhydroxiden, dadurch gekennzeichnet, dass in die Dampfkreisläufe der Kraft- und Heiz-Kraft-Prozesse eine Lauge, vorzugsweise Natronlauge, integriert wird, deren Konzentration durch Absorption und Desorbtion von Wasserdampf in vorgegebenen Grenzen zyklisch geändert wird, wie in Anspruch 8 definiert. Bevorzugte Ausgestaltungen sind in den abhängigen Ansprüchen angegeben.

Bevorzugt erfolgt die zyklische Änderung der Laugenkonzentration in vorgegebenen Grenzen dabei durch die oben beschriebene erfindungsgemäße zeitversetzte kontinuierliche Absorption und Desorbtion von Wasserdampf, einschließlich deren bevorzugten Ausgestaltungen (d.h. wie in Anspruch 1 und den abhängigen Ansprüchen definiert).

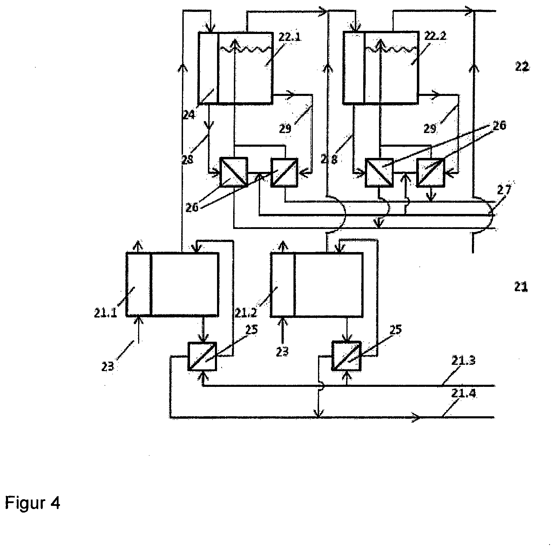

In Figur 4 ist beispielhaft dargestellt, wie der Sorptionsprozess (Laugekreisprozess) erfindungsgemäß in Dampf-, Gasturbinen- oder Motorkraftwerken mit vorzugsweise Heiz-Kraft-Werksprozessen, bestehend aus einem Dampfkessel mit Brennstofffeuerung oder einem Abhitzekessel, Dampfturbinen, Heiz- und Abdampfkondensatoren, Speisepumpen und Speisewasservorwärmungen, eine Lauge, z.B. ein Metallhydroxid, vorzugsweise in Form von Natronlauge, als Arbeitsmittel in den Wasser-Dampf-Kreisprozess integriert wird, dessen Konzentration durch Absorption und Desorbtion von Wasser in Schritten, als primäre und sekundäre Absorption mit je festgelegtem Konzentrationsbereich, zyklisch geändert wird, indem

- ein Desorbtionsprozess, der unter rekuperativer Zuführung von fühlbarer Wärme und/oder Kondensationswärme die Konzentration der Lauge erhöht, parallel zur Dampfturbine oder zwischen Dampfturbine und den Heiz- bzw. Abdampfkondensatoren installiert wird,
- ein Absorbtionsprozess parallel zum Dampfkessel oder an dessen Stelle in den Wasser-Dampf-Kreisprozess eingeordnet wird, der in seiner ersten Stufe Dampf aus der Dampfturbine und danach in den folgenden Stufen selbst erzeugten Dampf absorbiert.

Es ist erfindungsgemäß weiterhin vorteilhaft, dass Desorbtion und Absorption im Druckbereich von 0,01 - 100 bar, vorzugsweise 0,025 - 50 bar, insbesondere 0,03 - 50 bar arbeiten, wobei Desorbtion und Absorption im gleichen Druckbereich arbeiten können.

Es ist weiterhin erfindungsgemäß und vorteilhaft, dass

- zum Zwecke der Herstellung reicher und/oder angereicherter Lauge durch Desorbtion, zusätzlich oder allein, regenerative Energie, vorzugsweise für die Herstellung von überhitztem Heizdampf durch Kompression, zugeführt wird, und/oder
- in den Heizkraftwerksprozess ein bei oder leicht über Umgebungsdruck und -temperatur, wie z.B. einem Druck von mind. ca. 1,01 bar (abs.), sodass sichergestellt ist, dass zwischen Lauge und Umgebungsluft kein Stoffaustausch stattfinden kann (alternativ kann dies auch über eine Inertgasbespannung erfolgen), arbeitender Produktspeicher für die durch Desorbtion erzeugten Produkte, d.h. reiche und/oder angereicherte Lauge und Wasser, und die durch Absorption hergestellte arme und/oder abgereicherte Lauge integriert wird, in dem diese Produkte getrennt voneinander zeitlich unbegrenzt gelagert werden können.

Erfindungsgemäß ist es weiterhin bevorzugt, dass

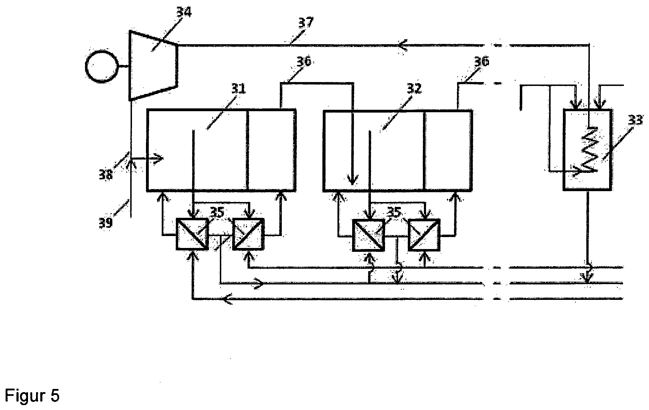

- die Desorbtionsdämpfe der Druckstufen der primären Desorbtion innerhalb der primären Desorbtion gekühlt oder im überhitzten Zustand direkt den Druckstufen der sekundären Desorbtion als Heizdämpfe zugeführt und dort kondensiert werden, und/oder
- vor jeder Druckstufe der primären Desorbtion die mit der reichen Lauge aus der Druckstufe abgeführte Wärme rekuperativ an die dieser Druckstufe zuzuführende angereicherten Lauge übertragen wird, wie in Figur 5 gezeigt, und/oder
- die der sekundären Desorbtion zugeführte arme Lauge vor ihrer Einleitung in die jeweilige Druckstufe rekuperativ vorgewärmt wird durch die fühlbare Wärme des aus diesen Stufen abzuführenden Dampfkondensats und angereicherten Lauge vorgewärmt wird, und/oder
- die aus den Absorbtionsstufen mit der armen Lauge abgeführte Wärme neben der Vorwärmung von reicher und/oder angereicherter Lauge und Wasser auch für die Erzeugung von Wasserdampf für die Absorbtion genutzt wird, und/oder

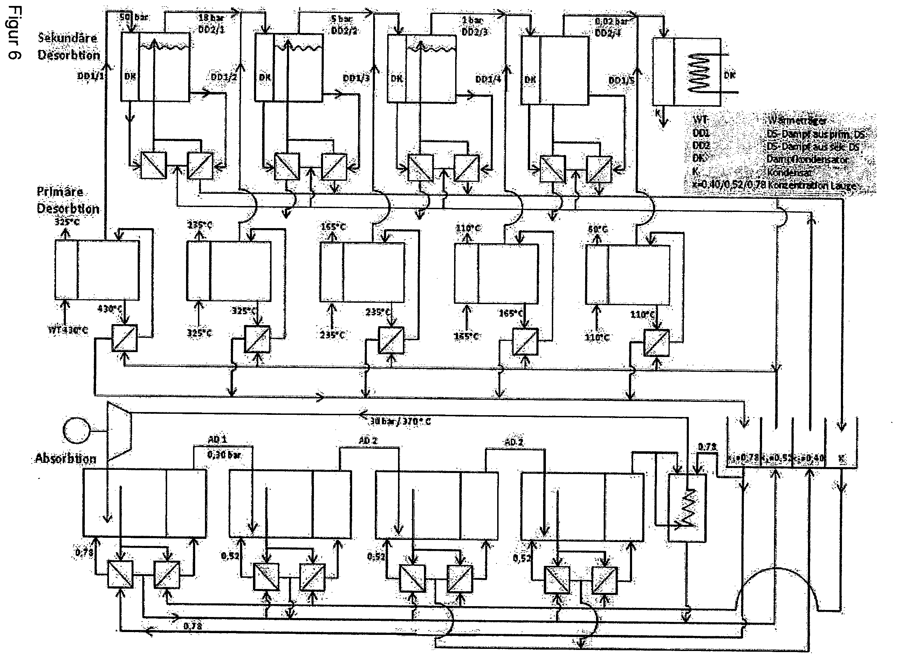

- die Absorbtion in dampfseitig hintereinander und lauge- und wasserseitig parallel geschalteten Druckstufen durchgeführt wird (s. Figur 6), indem der durch rekuperative Übertragung der Absorbtionswärme an einen Wasserdampfkreisprozess in den Absorbtionsstufen produzierte Dampf, der in Abhängigkeit vom Konzentrationsbereich der Lauge gegenüber dem Siededruck der Lauge durch höheren Druck gekennzeichnet ist, von der jeweils unter niedrigerem Absorbtionsdruck arbeitenden Stufe in die unter höherem Absorbtionsdruck arbeitende Absorbtionsstufe eingeleitet wird, und/oder
- die letzte Absorbtionsstufe neben der Erzeugung von Absorbtionsdampf, auch der Überhitzung des Dampfes dient, der der prozessintegrierten, gegebenenfalls in beide Kreisprozesse integrierten, Dampfturbinenanlage/Kraftmaschine zum Zwecke der Verrichtung technischer Arbeit als Frischdampf zugeführt wird, und/oder
- die prozessintegrierte Dampfturbinenanlage als Gegendruck-Entnahmeturbine so ausgelegt ist, dass der Gegendruckdampf oder Entnahmedampf das Druckniveau der ersten Absorbtionsstufe hat und dieser zugeführt wird, und/oder
- der aus der Absorbtion der Dampfturbinenanlage/Kraftmaschine zugeführte Frischdampf vor der Kraftmaschine durch externe fühlbare Wärme überhitzt wird, und/oder
- der Absorbtion Desorbtionsdampf aus der primären Desorbtion und/oder der sekundären Desorbtion, alternativ zu dessen Kondensation in der Heiz- oder Abdampfkondensation, mit gegenüber der ersten Absorbtionsstufe leicht erhöhtem Druck zugeführt wird.

Desorbtion und Absorbtion können erfindungsgemäß vorzugsweise im Sinne eines "Speicherheizkraftwerkes" zeitlich unabhängig betrieben werden.

Die einzelnen erfindungsgemäßen Desorbtions- und Absorbtionsstufen arbeiten isobar mit gleitenden Siedetemperaturen, die durch die Konzentrationsgrenzen der zugeführten und abgeführten Lauge und das gewählte Druckniveau der Desorbtion und/oder Absorbtion vorgegeben sind. Diese Temperaturdifferenz beträgt beispielsweise bei einem Betriebsdruck von 10 bar bei der Desorbtion im Konzentrationsbereich der zugeführten Lauge von 0,52 kg NaOH/kg Lauge und der abgeführten Lauge von 0,74 kg NaOH/kg Lauge ca. 80 Kelvin. Im Falle der Absorbtion sind die Konzentrationsverhältnisse der zu- und abgeführten Lauge umgekehrt, die Temperaturdifferenz jedoch gleich, 80 Kelvin.

Zur Sicherung einer thermodynamisch optimalen Betriebsweise und unter Beachtung der von der Konzentration abhängigen Dichte der Lauge erfolgt deshalb die Anreicherung der Lauge in den Desorbtionsstufen vorteilhaft über die Höhe der jeweiligen Desorbtionsstufe von oben nach unten, wobei die Konzentration über die Höhe über die rekuperative Zuführung der Desorbtionswärme gesteuert wird.

In den Druckstufen der Absorbtion ist es zweckmäßig, der jeweiligen Druckstufe die abzumagernde Lauge von oben zuzuführen und mit der Temperatur des unteren Siedeendes aus der Druckstufe abzuführen.

Bei erfindungsgemäßer Abführung der mit gleitender Temperatur anfallenden Absorbtionswärme an eine isotherme Wasserverdampfung, erfolgt die Ableitung des Dampfkondensates aus der jeweiligen Absorbtionsstufe mit annähernd Kondensationstemperatur, während die Ableitung der abgemagerten Lauge mit etwa der Temperatur erfolgt, die ihrer Siedetemperatur unter dem Druck der Absorbtionsstufe entspricht.

Die vorliegende Erfindung kann durch Betriebsweisen in einem oder über mehrere Konzentrationsbereiche sowie in Druckstufen vielfältig ausgestaltet und aufgabenspezifisch optimiert werden. Diese Optimierung kann nach thermodynamischen oder vorrichtungstechnischen Gesichtspunkten erfolgen und durchaus gegenläufige Maßnahmen zur Folge haben. So ist es einerseits in Bereichen hoher Laugekonzentration thermodynamisch zweckmäßig, für die Beheizung der im Druckniveau unterschiedlichen Druckstufen die fühlbare Wärme von Energieträgern wie Abgas, Thermoöl oder Wasser, und in Bereichen niedriger Konzentration die Kondensationswärme von externem Wasserdampf oder des Wasserdampfes aus der primären und sekundären Desorbtion zu nutzen, andererseits kann es aus Gründen des apparativen Aufwandes zweckmäßig sein, die primäre und sekundäre Desorbtion im gleichen Konzentrationsbereich durchzuführen. Für die Absorbtion gilt das Gleiche. So ist es thermodynamisch besonders zweckmäßig, die Absorbtion in einem Bereich niedriger Konzentration unter Nutzung der Absorbtionswärme für die Dampferzeugung über mehrere Druckstufen so durchzuführen, dass der Siededruck mit jeder Absorbtionsstufe erhöht wird und den Dampf aus der letzten Absorbtionsstufe des niederen Konzentrationsbereiches vor seiner Nutzung in einem Kraftprozess durch die Wärme einer Absorbtion mit Lauge höherer Konzentration zu überhitzen. Die größte Arbeitsfähigkeit erreicht der Laugekreisprozess wenn die Temperaturdifferenzen zwischen dem isobaren Siedeverhalten der Lauge und der isothermen Kondensation des Wassers genutzt wird. Erfindungsgemäß ist aber auch die Nutzung der Temperaturdifferenz zwischen der Absorbtion bei hoher Konzentration und der Desorbtion bei niedriger Konzentration für die Gestaltung des Kraftprozesses.

Ein alternativer oder zusätzlicher Einsatzzweck der Erfindung ist die Produktion von Kondensat für die Trink- und Nutzwasserversorgung. Dies wird erreicht durch die Auskopplung von Kondensat aus der Desorbtion, das durch Einkopplung von externem Dampf in die Absorbtion, der durch Flashverdampfung aus Wasser, z.B. Abwasser, oder Umgebungswasser, wie Oberflächen- oder Salzwasser gewonnen wurde.

Die Produkte des Laugekreisprozesses, d.h. arme, reiche und angereicherte Lauge und Wasser, werden in Speichern bzw. internen Speichern, die zwischen Absorbtion und Desorbtion des Laugekreisprozesses, wie beispielhaft in Figur 2 gezeigt, angeordnet sind, bei vorzugsweise Umgebungsdruck gespeichert und von dort bedarfsgerecht (d.h. gemäß Lastgang) dem Laugeprozess wieder zugeführt. Vorteilhaft werden die jeweiligen Speicher mit einem Druck von mind. ca. 1,01 bar (abs.) betrieben, sodass sichergestellt ist, dass zwischen Lauge und Umgebungsluft kein Stoffaustausch stattfinden kann (alternativ kann dies auch über eine Inertgasbespannung erfolgen). Die Speicher können grundsätzlich auch bei gegenüber der Umgebungstemperatur erhöhter Temperatur oder niedrigerer Temperatur betrieben werden. Erfindungsgemäß erfolgt die Speicherung der Desorbtions- und Absorbtionsprodukte bevorzugt in einem in Schotts, die wiederum in Kammern unterteilt sind, eingeteilten Speicher, wobei das Volumen der die Schotts bildenden Kammern dem Volumenverhältnis der Produkte entspricht. Die Be- und Entladung des Speichers kann so über jeweils einen Schott erfogen, während die anderen Schotts mit den Produkten der Desorbtion oder Absorbtion gefüllt sind.

Die Vorteile des erfindungsgemäßen Verfahrens gegenüber dem Stand der Technik ergeben sich daraus, dass durch die Integration von Laugekreisprozessen (Sorbtionsprozessen) in einen Wasser-Dampf-Kraftprozess neben Elektroenergie und Wärme auch reiche und/oder angereicherte Lauge durch den Kraftprozess selbst oder durch zugeführte Energie, vorzugsweise regenerative Energie, produziert werden kann, die einfach bei im Wesentlichen Umgebungsdruck gespeichert und ohne Brennstoffzufuhr bedarfsgerecht für die Produktion von Frischdampf für den Kraftprozess verwendet werden.

Ein besonderer Vorteil ergibt sich aus der zeitlich unbegrenzten und verlustarmen Lagerfähigkeit der Produkte reiche, angereicherte und arme und/oder abgereicherte Lauge sowie des Wassers aus dem Laugekreisprozess und der zum Stand der Technik vergleichsweise hohen spezifischen Energiedichte dieser Speicherung.

Die vorzugsweise getrennte Lagerung von armer und reicher Lauge sowie von Wasser ermöglicht die zeitlich und örtlich unabhängige Nutzung des Verfahrens sowohl in der Energieversorgung als auch in der Mobilität.

Die Erfindung ermöglicht insbesondere das Zusammenwirken der konventionellen und der regenerativen Energiewirtschaft zum gegenseitigen Vorteil. Sie vermeidet Abschaltungen in beiden Bereichen sowie Überkapazitäten in der Erzeugung und Fortleitung von Elektroenergie, verbessert durch die Schaffung einer Reserve die Versorgungssicherheit und ermöglicht die Ablösung der fossilen und atomaren Brennstoffe sowie eine unabhängige und autarke, lokale und regionale Energieversorgung mit regenerativer Energie.

Neben diesen grundsätzlichen Vorteilen ist die Erfindung aber auch für die lokale, industrielle und gewerbliche Energieversorgung sowie für große Antriebe im Schiffs- und Schienenverkehr vorteilhaft. So kann die Leistung eines Motorkraftwerkes durch die erfindungsgemäße Integration des Laugekreisprozesses (Sorbtionsprozesses) um bis zu 35% erhöht werden, was den Kraftwerkswirkungsgrad von 40 auf über 50% anheben kann. Bezogen auf die eingekoppelte Abgas- und Kühlwasserwärme errechnet sich für die Zusatzleistung ein Umwandlungswirkungsgrad von ca. 30 %. Eine Technologie der Abwärmeverwertung mit besseren Werten ist bislang nicht bekannt.

Der besondere Vorteil ergibt sich aber aus der Speicherbarkeit der Sorbtionsprodukte, die über den Tag, die Woche oder länger gespeichert und bei Verfügbarkeit von externem Abdampf beispielsweise einen Speicher-Heiz-Kraftwerksbetrieb auf Basis eines 2 MW$_{el}$-Motorkraftwerk mit einer Spitzenleistung bis 5 MW und einer Speicherkapazität von 10 MWh im Tagesbetrieb und von 50 MWh im Wochenbetrieb erlauben. Noch wesentlich höhere Leistungen lassen sich in Speicher-Heiz-Kraftwerken erreichen, die durch Dampfkompression unter Einkopplung von regenerativer Energie angetrieben werden.

Ein weiterer Vorteil ist, dass Dampf für die Absorbtion erfindungsgemäß auch durch Flashverdampfung von Wasser, wie Kühlwasser, Abwasser und Oberflächenwasser, darunter Salzwasser bis Umgebungstemperaturniveau bereitgestellt werden und von der reichen Lauge und/oder der angereicherten Lauge absorbiert werden kann. Dieser Dampf wird bevorzugt im Sorbtionsprozess in trinkwasserfähiges Kondensat umgewandelt.

Weiterhin vorteilhaft für die lokale Nutzung in Kommunen und Gewerbe ist, dass der nach der sekundären Desorbtion vorliegende Desorbtionsdampf immer noch Heizdampfqualität hat, sodass in den Betriebzeiten der Desorbtion neben reicher und angereicherter Lauge auch Heizwärme abgegeben werden kann.

Ein weiteres Beispiel betrifft ein Verfahren zur Transformation und Speicherung von regenerativer Energie und/oder Abwärme durch Umwandlung in chemische und physikalische Energie sowie deren Speicherung und geregelte Freisetzung, dadurch gekennzeichnet, dass

a. Wasserdampf aus wässrigen Lösungen von Laugen, wie der Natron- oder Kalilauge durch Einkopplung regenerativer Energie oder Abwärme desorbiert und durch Ableitung von Energie vorzugsweise unter Umgebungsdruck wieder absorbiert wird und die dabei anfallende reiche und arme Lösung sowie das Wasser unabhängig von einander in Tanks gelagert werden,

b. das Verfahren betrieben wird, indem bei Verfügbarkeit von solar-regenerativer Energie oder Abwärme aus Energieumwandlungs- und Anwendungsprozessen arme Lösung dem entsprechenden Tank entnommen und einem Desorber zugeführt wird, der durch einen Wärmeträgerkreislauf, vorzugsweise einen Druckwasserkreislauf, rekuperativ beheizt wird,

c. der Wärmeträger unter Abgabe von Wärme den Rekuperator im Desorber von unten nach oben durchströmt und die arme Lauge über dem Rekuperator so versprüht wird, dass diese an den Rekuperatorwänden unter Aufnahme von Wärme und unter Temperaturerhöhung nach unten abfließt, sich am Boden des Desorbers sammelt und von dort als reiche Lösung mit Siedetemperatur dem entsprechenden Tank zugeführt wird,

d. der Wärmeträgerkreislauf durch eine Wärmepumpe oder Abwärme aus Energieumwandlungs- oder -anwendungsprozessen kontinuierlich auf ein Temperaturniveau aufgeheizt wird, das die Desorbtion der armen Lauge bis zu einer für den Gesamtprozess optimalen Anreicherung unter Drücken ermöglicht, die eine Kondensation das entstehenden Wasserdampfes bei Umgebungstemperatur gestattet, z.B. 0,025 bar,

e. bei Beheizung des Wärmeträgerkreislaufes durch eine Wärmepumpe die Kondensation des bei der Desorbtion entstehenden Wasserdampfes im Verdampfer der Wärmepumpenanlage erfolgt und das Wasserdampfkondensat dem entsprechenden Tank und von dort bei Bedarf an den Absorber oder an Dritte, z.B. als Trinkwasser, abgegeben wird,

f. im Falle eines für die Energieversorgung unzureichenden Angebotes an solar-regenerativer Energie oder Abwärme dem entsprechendem Tank angereicherte Lösung entnommen und gleichzeitig mit Dampf einem Absorber zugeführt wird, der unter einem Dampfdruck zwischen dem Druck des Desorbers und einer Flashverdampfung des die Absorbtion kühlenden Kreislaufwassers arbeitet,

g. der für die Absorbtion erforderliche Dampf durch Flashverdampfung von Kreislaufwasser aus der rekuperativen Absorberkühlung oder unter Vakuum siedendes Umgebungswasser, vorzugsweise Oberflächenwasser der Meere, erzeugt wird,

h. die aus einem Tank dem Absorber zugeführte reiche Lösung erfindungsgemäß über dem im Absorber installierten Rekuperator zur temperaturgeführten Aufnahme der Absorptionswärme so versprüht wird, dass diese an den Wänden des Rekuperators unter Abkühlung mit Wasserdampf reagiert, abfließt und sich am Boden des Absorbers als arme Lösung sammelt,

i. die sich am Boden des Absorbers sammelnde arme Lösung in Rekuperatoren durch prozessinternes Dampfkondensat aus der Desorbtion und reiche Lösung ausgekühlt wird, bevor sie dem Tank für die arme Lösung zugeführt wird.

Bevorzugt ist dabei, dass

- das Druckwasser aus der Absorberkühlung einer im Druck geregelten Flashverdampfung zugeführt wird, die das Druckwasser auskühlt und Prozessdampf bereitstellt,
- der Flashdampf entweder direkt oder nach Abgabe technischer Arbeit in einer Expansionsmaschine dem Absorber zugeführt wird, wobei die Expansion in Bezug auf den Gegendruck zum Zwecke der Regelung und Prozessoptimierung variabel gestaltet wird,
- das ausgekühlte aber noch heiße Wasser aus der Flashverdampfung direkt oder über einen Rekuperator, der eine externe Wärmesenke versorgt, durch Druckerhöhung wieder dem Druckwasserkreislauf zugeführt wird.

Weiterhin ist bevorzugt, dass bei Einsatz der Erfindung zur Wasserversorgung

- warmes Oberflächenwasser oder über Wärmepumpen, Sonnenkollektoren oder Abwärme erwärmtes Wasser unter Vakuum einer Flashverdampfung unterzogen und der dabei entstehende Dampf der Absorption der zweiten Prozessstufe zugeführt wird und das dem Prozess so zugeführte Wasser durch Desorbtion unterhalb des Absorbtionsdrucks als Wasserdampf aus der armen Lösung ausgetrieben, dieser kondensiert und das Kondensat als Wasser mit Trinkwasserqualität an Dritte abgegeben wird,
- die Absorbtionswärme aus der zweiten Prozessstufe zur Desorbtion der armen Lösung der ersten Prozessstufe verwendet wird,
- die Kondensation des Desorbtionsdampfes in einem Verdampfer einer Wärmepumpenanlage stattfindet, die die Kondensationswärme des Arbeitsmittels an eine Flashverdampfung des Umgebungswassers, einer Heizwärme- oder Warmwasserversorgung zugeführt wird,
- die Trinkwasserversorgung mit einer Wärme- oder Warmwasserversorgung gekoppelt ist.

Ebenfalls bevorzugt ist, dass die erste und zweite Prozessstufe zeitlich und örtlich unabhängig voneinander, sowohl im stationären als auch im mobilen Betrieb, betrieben werden.

Ein weiteres Beispiel betrifft ein Verfahren zur Speicherung und Rückgewinnung von Elektroenergie, Wärme und Wasser in bzw. aus einem Kreisprozess mit wässrigen Lösungen von Laugen, wie Natron- oder Kalilauge, durch Desorbtion und Absorbtion von Wasserdampf über ein vorgegebenes Konzentrationsgefälle der Lösung mit den Zwischenprodukten reiche Lösung und Wasser sowie arme Lösung, dadurch gekennzeichnet, dass

- in einem vorzugsweise geschlossenen kontinuierlichen und reversiblen Kreisprozess, in dem ein Kreislauf mit wässriger Lösung, vorzugsweise der Natron- oder Kalilauge, mit Wasserdampfkreisprozessen stofflich direkt und thermisch durch gegenseitige rekuperative Wärmeübertragung so kombiniert ist, dass Wasser und Lösung als Reaktanten den Kreisprozess mit den Prozessstufen Desorbtion und Absorbtion zyklisch durchlaufen und die dabei entstehenden Zwischenprodukte reiche Lösung und Wasser einerseits und arme Lösung andererseits als Potenziale mit unterschiedlichem energetischen Niveau in einem Speicher unter Umgebungsdruck und -temperatur gelagert und von dort bedarfsgerecht dem Kreisprozess wieder zugeführt werden,

- im Kreisprozess einerseits die Konzentration von armer Lösung, die aus einem Speicher zugeführt wird, durch stufenweise desorbtive Freisetzung von Wasserdampf bis auf das Konzentrationsniveau der reichen Lösung angehoben wird, indem der armen Lösung in einer ersten Desorbtionsstufe Wärmeenergie, vorzugsweise durch kondensierenden Wasserdampf aus einem elektrisch angetriebenen Wasserdampf-Wärmepumpenprozess, rekuperativ zugeführt wird, und der in dieser und den nachfolgenden Desorbtionsstufen bei gestuft sinkendem Druck durch Desorbtion entstehende Wasserdampf in den jeweils nachfolgenden Desorbtionsstufen unter rekuperativer Abgabe seiner Kondensationswärme an ebenfalls aus vorgeschalteten Desorbtionsstufen zufließende angereicherte Lösung zu Wasser kondensiert wird, wobei vorzugsweise ein Teil oder der ganze Desorbtionsdampf der Desorbtionsstufe, die unter einem Desorbtionsdruck von ca. 1 bar arbeitet, nicht direkt als Heizdampf in der folgenden Desorbtionsstufe verwendet wird, sondern einem Wasserdampf-Wärmepumpenprozess als Arbeitsmittel zugeführt, von diesem durch Kompression im Druck erhöht und danach der ersten Desorbtionsstufe als Heizdampf mit einem Druck von bis zu ca. 20 bar zugeführt wird und damit den Kreis-prozess schließt, und das Kondensat aus den rekuperativ beheizten Desorbtionsstufen und die reiche Lösung aus der letzten, vorzugsweise durch Flashverdampfung bis zum Umgebungstemperaturniveau arbeitenden Desorbtionsstufe an einen unter Umgebungsdruck und -temperatur arbeitenden Speicher abgeführt werden,

- andererseits im Kreisprozess die Konzentration der reichen Lösung durch Abführung von Wärmeenergie zyklisch schrittweise bis auf das Konzentrationsniveau der armen Lösung gesenkt wird, indem der aus einem Speicher einem Absorbtionsprozess zugeführten reichen Lösung bei gestuft steigendem Druck schrittweise Wasserdampf zugeführt wird, der von dieser absorbtiv gebunden wird und durch gestuft rekuperative Übertragung der Absorbtionswärme an aus einem Speicher zugeführtes Wasser erzeugt wurde, wobei die Absorbtionswärme der ersten Absorbtionsstufe, der die reiche Lösung zufließt, nicht direkt als Absorbtionsdampf, sondern für die Erzeugung von Frischdampf mit einem Druck bis zu ca. 20 bar und einer Temperatur von bis zu ca. 340°C genutzt wird, der über einen Wasserdampfkraftprozess die bei der Desorbtion zugeführte Exergie, vorzugsweise in Form von Elektroenergie, wieder freisetzt und den Dampfprozess durch Zuführung von entspanntem Dampf als Absorbtionsdampf zur letzten Absorbtionsstufe schließt, während das zugeführte Wasser, gebunden an die Lösung, nach prozessinterner rekuperativer Nutzung ihrer fühlbaren Wärme zur Vorwärmung der zufließenden armen Lösung und des Wassers als arme Lösung mit annähernd Umgebungstemperatur zum Speicher zurückgeführt wird.

Bevorzugt ist dabei, dass der ersten Stufe der Desorbtion von Wasserdampf bei im Kreisprozess niedrigster Konzentration der Lauge, Wärme mit so hoher Temperatur rekuperativ zugeführt wird, dass der Druck des sich über der Lösung bildenden Wasserdampfes, vorzugsweise höher als ca. 5 bar, für die Beheizung der nachfolgenden Stufe durch Kondensation ausreicht, wobei die zu beheizende zweite Desorbtionsstufe gegenüber der ersten Desorbtionsstufe bei höherer Konzentration der Lösung, aber durch Druckabsenkung niedrigerer Siedetemperatur abläuft und die dampfseitige Kopplung der Desorbtionsstufen auch nachfolgende Desorbtionsstufen kennzeichnet.

Weiterhin bevorzugt ist dabei, dass die Wärme mit hoher Temperatur vorzugsweise durch unter entsprechendem Druck kondensierenden Wasserdampf bereitgestellt wird, der durch Kompression von internem Dampf aus dem Kreisprozesses selbst oder extern produziert wurde.

Weiterhin bevorzugt ist dabei, dass mindestens eine der Desorbtionsstufen unter einem Dampfdruck von ca. 1 bar betrieben und mindestens ein Teil des dabei entstehenden Desorbtionsdampfes einer Dampfkompression oder anderen externen Verwertungen zugeführt wird und danach die Desorbtion unter Vakuum bis zur gewünschten Konzentration der Lösung bei einem Dampfdruck so durchgeführt wird, das der Desorbtionsdampf bei Umgebungstemperatur kondensiert werden kann.

Weiterhin bevorzugt ist dabei, dass die erste Stufe der Absorbtion durchgeführt wird, indem der Lösung bei im Kreisprozess höchster Konzentration, Wasserdampf mit hohem Druck, vorzugsweise über ca. 5 bar, zugeführt und in die Lösung eingebunden wird, der im Wasserdampfprozess der nachfolgenden zweiten Absorbtionsstufe durch rekuperative Übertragung der Absorptionswärme, unter weiterer Absenkung der Konzentration der Lösung, und bei gegenüber der ersten Absorbtionsstufe niedrigerem Druck und niedrigerer Temperatur, produziert wurde, und diese dampfseitige Kopplung auch nachfolgende Absorbtionsstufen kennzeichnet.

Weiterhin bevorzugt ist dabei auch, dass das Konzentrationsgefälle der Lösung in der ersten Absorbtionsstufe so festgelegt wird, dass die Absorbtionswärme rekuperativ bei hoher Temperatur an den Wasserdampfprozess übertragen wird und der in dieser Stufe produzierte Dampf, gegebenenfalls nach Überhitzung, einer technische Arbeit verrichtende Expansion oder einer externen Nutzung als Prozess- oder Heizdampf zugeführt wird, wobei vorzugsweise dem Expansionsprozess im Druck reduzierter Wasserdampf, vorzugsweise bei ca. 1 bar, entnommen und einer der Absorbtionsstufen als Absorbtionsdampf zugeführt wird, die mit niedrigster Konzentration der Lösung im Kreisprozess arbeitet.

Weiterhin bevorzugt ist dabei auch, dass die letzte Absorbtionsstufe, die bei niedrigster Konzentration der Lösung im Kreisprozess arbeitet, Wasserdampf zugeführt wird, der durch Flashverdampfung von Abwasser, Meeres- oder Oberflächenwasser unter Vakuum, vorzugsweise bei Umgebungstemperatur, produziert wurde, und die dabei in der ersten Absorbtionsstufe anfallende Absorbtionswärme einer Nutzung zugeführt oder an die Umgebung abgegeben wird, und das mit dem Wasserdampf zugeführte Wasser aus der letzten Absorbtionsstufe, gebunden an die Lauge, als arme Lösung dem Kreisprozess zugeführt und aus der Desorbtionsstufe des Kreisprozesses als Destillat für eine Trink- oder Nutzwasserbereitung entnommen wird.

Bevorzugt ist dabei weiterhin, dass bei Einkopplung von Dampf aus unter Vakuum siedendem Wasser in die Prozessstufe Absorbtion, diese mit einer gegenläufigen Prozessstufe Desorbtion gekoppelt ist, die gegenüber der Absorbtion mit durchschnittlich niedrigerer Temperatur unter rekuperativer Zuführung der Absorbtionswärme betrieben wird, und der entstehende Desorbtionsdampf bei Umgebungstemperatur kondensiert und das Kondensat als Destillat an die Trink- und Nutzwasserbereitung abgegeben wird.

Bevorzugt ist dabei weiterhin auch, dass die Zwischenprodukte des Kreisprozesses reiche Lösung und Wasser sowie arme Lösung bei Umgebungsdruck und -temperatur getrennt von einander in einem Speicher gelagert, aus diesem geregelt entnommen und den Prozessstufen des Kreisprozesses zugeführt werden, wobei der Speicher in Schotts und jedes Schott in zwei Kammern unterteilt ist, in den Kammern die Zwischenprodukte der Desorbtion, reiche Lösung und Wasser getrennt von einander gelagert werden und die Schotts über beide Kammern die arme Lösung aus der Prozessstufe Absorbtion aufnehmen, wobei vorzugsweise je eine Kammer für reiche Lösung und eine für Wasser und ein Schott mit armer Lösung nur teilweise gefüllt werden und der Speicher mit minimalem Leerraum betrieben wird.

Das erfindungsgemäße Energieumwandlungs- und -speichersystem umfasst

- eine Einheit zur Einkopplung von extern gewonnener Energie, beispielsweise regenerativ erzeugter Wärmeenergie, wie Solarenergie, Geothermie oder in Wärmeenergie umgewandelte Wind- und Solarenergie oder Elektroenergie, auch aus konventionellen Prozessen, insbesondere als Kompressionsenergie, oder Abwärme aus Industrieanlagen, einschließlich Kraftwerken, z.B. in Form von Kühlwasser oder Wasserdampf;
- eine Einheit zur Durchführung eines Laugenkreisprozesses umfassend mindestens einen Desorber und mindestens einen Absorber, die jeweils mehrstufig ausgeführt sein können, für die Desorbtion bzw. Absorbtion von Wasserdampf aus oder in Lauge im Sinne der vorliegenden Erfindung und einen damit verbundenen Arbeitsmittelspeicher für die Speicherung von armer Lauge, angereicherter/reicher Lauge und Wasserdampfkondensat, der zwischen Desorber und Absorber geschaltet ist und vorzugsweise bei Umgebungsdruck und Umgebungstemperatur oder darüber arbeitet, wobei die jeweiligen Speicher auch räumlich getrennt angeordnet sein können; und
- eine Einheit zur Auskopplung von gespeicherter Energie, z.B. in Form von technischer Arbeit, Wärme oder Elektroenergie, insbesondere durch Verstromung von Dampf, wobei
- die Einheit zur Einkopplung von extern gewonnener Energie direkt und/oder über ein Wärmeträgersystem zur rekuperativen Wärmeübertragung mit dem mindestens einen Desorber verbunden ist,
- der Absorber zusätzlich mit einer Einrichtung zur Erzeugung von Frischdampf, insbesondere überhitztem Frischdampf, mittels der anfallenden Absorptionswärme bzw. eines Dampfüberhitzers gekoppelt ist,
- und die Einrichtung zur Erzeugung von Frischdampf mit der Einheit zur Auskopplung von gespeicherter Energie dampfseitig verbunden ist.

Erfindungsgemäß werden diese Einheiten bzw. deren Vorrichtungen so gestaltet, dass die den Innendruck des Sorbtionsprozess tragenden äußeren Behältnisse inseitig mit Wasserdampf beaufschlagt sind, so dass die Lauge führenden inneren Bauteile der Desorbtions- und Absorbtionsstufen druckentlastet sind.

Das erfindungsgemäße Energiespeichersystem ist vorzugsweise als Speicherheizkraftwerk ausgeführt, wobei die Einheit zur Einkopplung von extern gewonnener Energie insbesondere an ein konventionelles Kraftwerk (Motor-, Kohle- oder Gaskraftwerk) angeschlossen ist. Die Abwärme aus Abgas und/oder Kühlwasser wird dabei rekuperativ direkt und/oder über einen Wärmeträger an den Desorber zur Produktion angereicherter Lauge übertragen.

Um die so gespeicherte Energie freizusetzen, z.B. in Spitzenbelastungszeiten des Stromnetzes, wird die angereicherte Lauge im Absorber mit Dampf beladen und die freigesetzte Absorbtionswärme zur Erzeugung von Frischdampf genutzt (z.B. von Frischdampf mit einem Druck von bis zu 60 bar und einer Temperatur von mehr als 360°C), welcher zur Auskopplung von Wärmeenergie oder Elektroenergie (nach Verstromung über einen Elektrogenerator mit Entnahme-Gegendruckturbine) genutzt werden kann.

Eine weitere bevorzugte Ausführung des erfindungsgemäßen Energiespeicher-systems ist alternativ oder zusätzlich als Meerwasserentsalzungsanlage, wobei der Dampf für die Absorbtion, die gegenüber der Sattdampftemperatur des Flashdampfes bei höherer Temperatur durchgeführt wird, in der Lauge durch Flashverdampfung von Salzwasser bereitgestellt wird, welcher im weiteren Verlauf des Laugenkreisprozesses bei der Desorbtion als trinkwasserfähiges Kondensat anfällt und abgeführt wird.

Die vorliegende Erfindung bezieht sich auch auf sämtliche Kombinationen von bevorzugten Ausgestaltungen, wie insbesondere in den abhängigen Ansprüchen angegeben, soweit diese sich nicht gegenseitig ausschließen.

Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

Die Erfindung soll anhand der Figuren 1 - 6 und der folgenden Beispiele 1 bis 3 erläutert werden, ohne jedoch auf die speziell beschriebenen Ausführungsformen beschränkt zu sein.

Die Figuren zeigen dabei:

Fig. 1: die erfindungsgemäße Einkopplung der Desorbtionenergie über eine Wärmepumpe, die die Kondensationswärme des Desorbtionsdampfes aufnimmt, Energierückgewinnung durch Expansion von Flashdampf und Eispeisung von Flashdampf aus Ab- oder Meerwasser.

Fig. 2: erfindungsgemäße Desorbtion über mehrere Konzentrationsstufen durch stufenweise komprimierten Desorbtionsdampf und im Druck und Konzentration gestufte Absorbtion.

Fig.3: eine Ausführungsform der Erfindung mit einer gestuften Desorbtion über zwei Konzentrationsbereiche, umfassend eine primäre und eine sekundäre Desorbtion, und einer Absorbtion.

Fig. 4: die erfindungsgemäße Integration eines Laugekreisprozesses in den Kreisprozess von Dampf-, Gasturbinen- oder Motorkraftwerken mit vorzugsweise Heiz-Kraft-Werksprozessen, bestehend aus einem Dampfkessel mit Brennstofffeuerung oder einem Abhitzekessel, Dampfturbinen, Heiz- und Abdampfkondensatoren, Speisepumpen und Speisewasservorwärmungen;

Fig.5: eine erfindungsgemäße rekuperative Wärmeübertragung in der primären Desorbtion von der aus der Druckstufe abgeführten reichen Lauge an die dieser Druckstufe zuzuführender angereicherter Lauge;

Fig.6: eine erfindungsgemäße Durchführung der Absorbtion in dampfseitig hintereinander und lauge- und wasserseitig parallel geschalteten Druckstufen;

Wie in Figur 1 beispielhaft dargestellt erfolgt die Umwandlung und Speicherung von Energie, wie Wärme aus Wärmepumpen (5'), Sonnenkollektoren oder Abwärme aus Energieumwandlungen oder -anwendungen (7'), einschließlich koventioneller Verfahren, in der ersten Prozessstufe (A') - der Desorbtion- eines Laugekreisprozesses, wobei einer Lauge, z.B. wässriger Natronlauge, niedrigerer Konzentration (armer Lauge, 1') externe Energie zugeführt wird und deren Konzentration über Wasserdampfabgabe (11') erhöht wird.

Für der bedarfsgerechte (d.h. gemäß Lastgang, z.B. des Stromnetzes) Rückgewinnung der eingespeisten externen Energie wird die in der Prozessstufe (A') erhaltene Lauge höherer Konzentration (reiche Lauge, 4') in der zweiten Prozessstufe (B') -der Absorbtion- eines Laugekreisprozesses mit Dampf (25'), der durch Flashverdampfung von Kreislaufwasser (23') aus der rekuperativen Absorberkühlung (22') oder unter Vakuum siedendes Umgebungswasser (26', C'), vorzugsweise Oberflächenwasser der Meere, erzeugt wird, einem Absorber (24') zugeführt wird, der unter einem Dampfdruck zwischen dem Druck des Desorbers (20') und einer Flashverdampfung des die Absorbtion kühlenden Kreislaufwassers (23') arbeitet.

Die durch Absorbtion von Wasserdampf in der reichen Lauge freigesetzte Wärme wird über rekuperative Wärmeübertragung und Flashverdampfung von Kreislaufwasser in einer Dampftrommel (32') sowie nachfolgende Entnahme von Flashdampf, der in einer Dampfturbinenanlage (33') expandiert wird, als Elektroenergie ausgekoppelt.

Fig. 2 zeigt eine Ausführungsform der Erfindung als geschlossenen reversiblen thermo-chemischen Kreisprozess mit wässrigen Laugen, z.B. Lösungen der Natron- oder Kalilauge, mit einem integrierten atmosphärischem Speicher (1") für reiche Lauge (4") und Wasser (3") sowie arme Lauge (2"), bestehend aus den Prozessstufen Desorbtion (B", C") und Absorbtion (A"), die beide von der Lauge im Druck gestuft durchfahren werden, wobei die externe Energie (20", 38"), vorzugsweise durch Dampfverdichtung und kondensierenden Wasserdampf, der ersten Desorbtionsstufe (7"), der auch die arme Lauge (2") zugeführt wird und die unter erhöhtem Druck arbeitet, zugeführt wird und die Beheizung der anderen Desorbtionsstufen durch Desorbtionsdampf (13", 45") erfolgt, während die Rückgewinnung der Energie aus der ersten Absorbtionsstufe (29"), der die reiche Lösung (4") und Absorbtionsdampf, der in der nachfolgenden Absorbtionsstufe (30", 31") unter Nutzung von Absorbtionswärme unter erhöhtem Druck produziert wurde, zugeführt werden, über einen angekoppelten Dampfkraftprozess (25", 33") oder durch rekuperative Auskopplung von Wärme erfolgt.

Wie in Fig. 3 beispielhaft dargestellt, bezieht das erfindungsgemäße System bzw. Verfahren zur Umwandlung und Speicherung von Energie die externe Energie aus Abgas 12.6, z.B. eines Motorkraftwerks, welche in Form von Wärme rekuperativ an den Desorber 12.1 des Sorbtionskreisprozesses 12, insbesondere die primäre Desorbtion 12.1.1 übertragen wird, in welchem vorhandene Lauge durch Desorbtion von Wasserdampf angereichert wird.

In der gezeigten Ausführungsform wird zusätzlich Wasser, z.B. Abwasser oder Oberflächenwasser/Salzwasser 14.2, einer Flashverdampfung 14.3 unterworfen, welche mittels vorzugsweise regenerativ gewonnener (Wärme)Energie 14, wie Solarenergie 14.1 oder Geothermie, betrieben wird. Überschüssige Wärme wird rekuperativ über einen Wärmeträger 14.4 an den Desorber 12.1 übertragen. Der Flashdampf 14.3 wird komprimiert und als komprimierter Heizdampf 12.7 in der sekundären Desorbtion 12.1.2 zugeführt, in welcher eine weitere Anreicherung der Lauge erfolgt. Die Kompression des Flashdampfes 14.3 wird, vorzugsweise unter Verwendung regenerativer Energie 12.8 betrieben. Die externe Energie 14 kann zusätzlich oder alternativ auch aus konventionellen Prozessen stammen.

Die im Ergebnis der Desorbtion erhaltene angereicherte und/oder reiche Lauge kann im dafür vorgesehenen Bereich 13.3 des Arbeitsmittelspeichers 13 gespeichert und diesem bei Bedarf wieder entnommen und dem Absorber zugeführt werden. Entsprechend kann die im Ergebnis der Absorbtion erhaltene arme Lauge im dafür vorgesehenen Bereich 13.2 des Arbeitsmittelspeichers 13 gespeichert und diesem bei Bedarf wieder entnommen und dem Desorber zugeführt werden. Insoweit ist der Laugekreislauf 12.3 gewährleistet.

In der Desorbtion freigesetzter Wasserdampf kann über die Kondensatableitung 12.5 dem dafür vorgesehenen Bereich 13.1 des Arbeitsmittelspeichers 13 zugeführt und/oder über die Speiseleitung 11.1 einer mit der Absorbtion gekoppelten (Frisch)Dampferzeugung 12.2 und/oder einem Dampfkessel 11.2 eines externen Heiz-Kraft-Werksprozesses, vorzugsweise desselben, dessen Abgas 12.6 genutzt wird, zugeführt werden.

Der Absorbtionsdampf 12.4 speist sich aus einer Entnahme-Gegendruckturbine 11.3 des Wasser-Dampf-Kraftprozesses 11, welche mit Frischdampf 11.9 des Dampfkessels 11.2 betrieben wird, und/oder dem Flashdampf 14.3 und/oder Heizdampf und/oder freigesetztem Wasserdampf aus der Desorbtion.

Abdampf 11.6 ggf. unter Zugabe von Heizdampf aus der Desorbtion (12.10) und Entnahmedampf 11.4 der Entnahme-Gegendruckturbine 11.3 mit Elektrogenerator werden einer Kondensation (11.5 oder 11.7) zugeführt und können z.B. als trinkwasserfähiges Kondensat oder als Heizmittel aus dem System abgeführt werden oder über die Speiseleitung die Speiseleitung 11.1 der mit der Absorbtion gekoppelten (Frisch)Dampferzeugung 12.2 und/oder dem Dampfkessel 11.2 des externen Heiz-Kraft-Werksprozesses zugeführt werden.

Frischdampf 12.9 aus der mit der Absorbtion gekoppelten (Frisch)Dampferzeugung 12.2 wird der Entnahme-Gegendruckturbine 11.3 mit Elektrogenerator zugeführt, um eine bedarfsgerechte (d.h. gemäß Lastgang des Stromnetzes) Ableitung von Elektroenergie 11.8 zu gewährleisten.

Erfindungsgemäß wird somit die Abwärme 12.6 und ggfs. regenerative Energie 14 genutzt, um über die Desorbtion angereicherte oder reiche Lauge zu generieren, die im Speicher 13.3 gespeichert wird. Im Bedarfsfall, z.B. in Spitzenlastzeiten des Stromnetzes, wird die angereicherte oder reiche Lauge dem Absorber zugeführt. Die dabei freigesetzte Absorbtionswärme wird in der gekoppelten (Frisch)Dampferzeugung 12.2 für die Erzeugung von Frischdampf 12.9 genutzt, welche über die technische Arbeit der Entnahme-Gegendruckturbine 11.3 mit Elektrogenerator aus dem Sorbtionsprozess 12 ausgekoppelt und in den Wasser-Dampf-Kraftprozesses 11 eingekoppelt wird.

Fig. 4 betrifft die vorteilhafte erfindungsgemäße Ausgestaltung der Desorbtion mit primärer Desorbtion 21 und sekundärer Desorbtion 22. Sowohl die primäre Desorbtion 21 als auch die sekundäre Desorbtion 22 sind vorzugsweise mehrstufig, hier mindestens zweistufig (22.1 und 22.2 sowie 21.1 und 21.2).

Der ersten und zweiten primären Desorbtionsstufe 21.1 und 21.2 wird externe Energie in Form von Wärme zugeführt, z.B. aus einer (schrittweisen) Abgas- oder Heizdampfkühlung eines Motorkraftwerks.

Die im Ergebnis der primären Desorbtion 21 entstehende reiche Lauge 21.4 wird aus der jeweiligen primären Desorbtionsstufe 21.1 und 21.2 abgeführt in eine Vorwärmung 25 angereicherter Lauge 21.3, die ihrerseits nach rekuperativer Wärmeübertragung der jeweiligen primären Desorbtionsstufe 21.1 und 21.2 zugeführt wird.

Heizdampf aus der und/oder in der primären Desorbtionsstufe 21.1 und 21.2 freigesetzter Dampf dienen der rekuperativen Beheizung 24 der sekundären Desorbtionsstufen 22.1 und 22.2. Das anfallende Dampfkondensat 28 wird zur rekuperativen Vorwärmung 26 von armer Lauge 27 verwendet, die den sekundären Desorbtionsstufen 22.1 und 22.2 zugeführt wird.

Vorteilhaft kann Heizdampf aus der und/oder in der ersten sekundären Desorbtionsstufe 22.1 freigesetzter Dampf zusätzlich zur rekuperativen Beheizung weiterer sekundärer Desorbtionsstufen 22.2 verwendet werden.

Die im Ergebnis der sekundären Desorbtion 22 entstehende angereicherte Lauge 29 wird aus der jeweiligen primären Desorbtionsstufe 22.1 und 22.2 abgeführt in die rekuperativen Vorwärmung 26 von armer Lauge 27, die ihrerseits nach rekuperativer Wärmeübertragung der jeweiligen sekundären Desorbtionsstufe 22.1 und 22.2 zugeführt wird.

Vorteilhaft kann die angereicherte Lauge 29 aus sekundären Desorbtion 22 als angereicherte Lauge 21.3 der Vorwärmung 25 der jeweiligen primären Desorbtionsstufe 21.1 und 21.2 zugeführt werden.

Fig. 5 eine bevorzugte Durchführung der Absorbtion in mehreren (hier: mindestens zwei) dampfseitig hintereinander und lauge- und wasserseitig parallel geschalteten Druckstufen 31 und 32. Reiche oder angereicherte Lauge aus der Desorbtion bzw. aus dem Arbeitsmittelspeicher sowie ggf. Speisewasser werden den Absorbtions(druck)stufen 31 und 32 über eine Laugen- und Speisewasservorwärmung 35 zugeführt.

Desorbtionsdampf 39 und/oder Gegendruckdampf 38 einer prozessintegrierten (Entnahme-)Gegendruckdampfturbine 34 werden der ersten Absorbtions(druck)stufe 31 zugeführt.

Interner Absorbtionsdampf 36 aus der ersten Absorbtions(druck)stufe 31 wird der zweiten Absorbtions(druck)stufe 32 und ggfs. wird interner Absorbtionsdampf 36 aus dieser zweiten Absorbtions(druck)stufe 32 einer weiteren Absorbtions(druck)stufen zugeführt, usw.

Vorzugsweise dient die letzte Absorbtionsstufe der Erzeugung von überhitztem Frischdampf 37 hier mittels eines Dampfüberhitzers 33. Der Frischdampf 37 wird der Entnahme-Gegendruckturbine 34 zugeführt. Somit wird die im Sorbtionsprozess gespeicherte Energie über die technische Arbeit der Turbine 34 aus dem Sorbtionsprozess 12 ausgekoppelt und in einen externen Wasser-Dampf-Kraftprozesses eingekoppelt.

Ausführungsbeispiele

Die Erfindung wird beispielhaft mit 3 Ausführungsbeispielen beschrieben.

Ausführungsbeispiel 1

Die nachfolgende Beschreibung und Figur 1 geben ein Ausführungsbeispiel des erfindungsgemäßen Verfahrens.

Im Beispiel arbeitet das Verfahren mit wässrigen Lösungen der Natronlaugen unterschiedlicher Konzentration, wobei die gespeicherten Massen der Lösungen mit hoher und niederer Konzentration das Energiepotenzial, entsprechend der Differenz der chemisch gebundenen Energie, bilden.

In einer ersten Prozessstufe (A') wird die Konzentration der Natronlauge von 30 bis 60 % (arme Lösung/arme Lauge) (1') durch rekuperative Zuführung von fühlbarer Wärme über einen Wärmeträgerkreislauf (2'), der vorzugsweise Wasser als Wärmeträger verwendet, in einem Desorber (20') auf 60 bis 80 % (reiche Lösung/reiche Lauge) (4') angehoben. Zu diesem Zwecke wird die arme Lösung dem Tank (21') entnommen, über (1') dem Desorber (20') zugeleitet und dort über dem Rekuperator (3') fein versprüht, der die Desorbtionswärme dem Druckwasserkreislaufes (2') entnimmt und an die arme Lösung (1') rekuperativ überträgt, wobei die Übertragung der Wärme an die Lauge im Gegenstrom zur Flussrichtung der Lauge erfolgt.

Die dafür erforderliche Wärme für die Desorbtion wird entweder über eine Wärmepumpe (5'), die beispielsweise Kohlendioxid als Arbeitsmittel verwendet, das Wärmeenergie aus dem überkritischen Zustand über den Rekuperator (6') an den Wärmeträgerkreislauf (2') überträgt, oder über Sonnenkollektoren bzw. durch Abwärme aus der Energieumwandlung oder -anwendung (7'), die den Wärmeträgerkreislauf (2') über den Rekuperator (8') aufheizen, bereitgestellt.

Diese erste Prozessstufe wird insbesondere entsprechend Verfügbarkeit von regenerativer Energie, wie Sonnenstrahlung oder Wind bzw. Abwärme, bei Siedetemperaturen der Lösung von 30 bis 150 °C isobar bei einem Dampfdruck, der eine Kondensation des anfallenden Wasserdampfes (9') im Kondensator (10') durch verdampfendes Arbeitsmittel des Wärmepumpenprozesses bei Umgebungstemperatur ermöglicht, z. B. 0,023 bar, betrieben. Im Falle der Beheizung des Wärmeträgerkreislaufes durch solare Strahlung oder Abwärme (7') ist die Kondensationswärme des Dampfes aus der Desorbtion an die Umgebung oder einen zusätzlichen Druckwasserkreislauf abzuführen.

Das Wasserkondensat (11') wird im Tank (12') und die reiche Lösung (4') im Tank (13') gespeichert.

Die erfindungsgemäß zweite Prozessstufe (B') wird betrieben, wenn nicht genügend regenerative Energie, wie solare Strahlung oder Wind, oder Abwärme zur direkten Versorgung mit Elektroenergie und Wärme zur Verfügung stehen, die Versorgung aber aufrechterhalten werden soll.

Zu diesem Zwecke wird entsprechend Versorgungsbedarf dem Tank (12') über (14') Wasser und dem Tank (13') über (15') reiche Lösung geregelt entnommen und über die Rekuperatoren (16') über (18') bzw. (17') über (19') dem Absorber (24') zugeführt und dort über dem Rekuperator (22') fein versprüht. Gleichzeitig wird dem Absorber (24') von unten Wasserdampf (25') zugeführt, der dem Druckwasserkreislauf (23') entnommen wurde oder über externe Quellen bereitgestellt wird.

Eine solche externe Quelle für Wasserdampf ist erfindungsgemäß ein unter Vakuum stehender Behälter (26') der dritten Prozesstufe (C'), dem Umgebungswasser (27'), z. B. warmes Meerwasser zugeführt und aus dem durch Flashverdampfung (28') abgekühltes Meerwasser (29') über (30') abgegeben wird, wobei das für die Flashverdampfung (28') erforderliche Vakuum durch die chemische Reaktion des Flashdampfes mit der reichen Lösung (19') im Absorber (24') aufrechterhalten wird. Die mit dem externen Flashdampf (31') eingetragene Wassermasse kann erfindungsgemäß als Trinkwasser aus dem Tank (12') dem erfindungsgemäßen Verfahren entnommen und einer externen Trinkwasserversorgung zugeführt werden.

Die erfindungsgemäße Auskopplung von Elektroenergie erfolgt in diesem Beispiel durch Flashverdampfung von Kreislaufwasser in einer Dampftrommel (32'). Aus dieser wird der Flashdampf entnommen und je nach Betriebsweise der zweiten Prozessstufe unter Abgabe von technischer Arbeit in Dampfturbinenanlagen (33') gegebenenfalls zweistufig expandiert.

Die Auskopplung von Heiz- und Prozesswärme ist erfindungsgemäß vorteilhaft möglich, wenn das Druckwasser (23') als Vorlauf einer Wärmeversorgung (34') zugeführt und danach als Rücklauf wieder in den Druckwasserkreislauf eingebunden wird. Zum Zwecke der Auskopplung von Wasser aus dem erfindungsgemäßen Verfahren wird Flashdampf aus Umgebungswasser (31') über die Abdampfsammelschiene (25') dem Absorber (24') zugeführt.

Ausführungsbeispiel 2

Die Erfindung wird mit Hilfe von Figur 2 beschrieben und der Stoff- und Energieumsatz rechnerisch abgeschätzt. Der Prozesszyklus verläuft im Beispiel über ein Konzentrationsgefälle von 75 bis 30 %. Der Prozessstufe Desorbtion (B") wird aus dem Speicher (1") arme Lösung/arme Lauge (2") mit einer Konzentration von 30 % zugeführt. Bei dieser Konzentration sind in der Lösung 2.333 kg Wasser an 1.000 kg Natronlauge gebunden.

Die arme Lösung (2") wird durch rekuperative Zuführung von Wärme in der Prozessstufe Desorbtion in Wasser (3") und reiche Lösung/reiche Lauge (4") mit einer Konzentration von 75 % umgewandelt. In diesem Zustand sind noch 333 kg Wasser pro t Natronlauge gebunden. Durch Desorbtion müssen also 2.000 kg Wasser (3") aus der armen Lösung (2") ausgedampft werden.

Erfindungsgemäß werden im Beispiel 3.333 kg arme Lösung (2") dem Speicher (1") mit Umgebungstemperatur entnommen, im Druck erhöht und - gegebenenfalls im Rekuperator (5") durch Heizdampfkondensat (6") bis auf 150 °C vorgewärmt und der ersten Desorbtionsstufe (7"), in der 400 kg Wasser verdampft werden, zugeführt. Die erste Desorbtionsstufe (7"), die unter einem Siededruck der Lösung von 10 bar arbeitet, wird rekuperativ beheizt durch 500 kg kondensierenden Sattdampf (8"), der durch mehrstufige Kompression (9") von 400 kg Desorbtionsdampf (15") und Kondensateinspritzung (10") mit einem Druck von 16 bar bereitgestellt wird. Die unter einem Siededruck der Lösung von 10 bar arbeitende erste Desorbtionsstufe (7") erhöht die Konzentration der Lösung auf 34 %, wodurch die Masse der Lösung um 400 kg auf 2.933 kg reduziert wird. Die so angereicherte Lösung (11") wird der zweiten Desorbtionstufe (12") zugeführt, die durch den 10 bar-Desorbtionsdampf (13") aus der ersten Desorbtionsstufe (7") beheizt wird. Desorbiert werden in der zweiten Desobtionsstufe (12") 600 kg Wasserdampf bei einem Siededruck von ca. 4,5 bar. Der Desorbtionsdampf (38") aus der zweiten Desorbtionsstufe (12") beheizt die dritte Desorbtionsstufe (14"). Die Masse der angereicherten Lösung beträgt nach der zweiten Desorbtionsstufe (12") noch 2.333 kg, bei einer Konzentration von ca. 43 %.

Der für die Kompression erforderliche Dampf (15") wird im Beispiel der dritten Desorbtionsstufe (14") mit einem Druck von 1 bar entnommen. Dieser Siededruck der Lösung wird bei einer Konzentration von ca. 52 % und einer Desorbtionstemperatur von 148°C erreicht. Somit ist es möglich, der dritten Desorbtionsstufe (14") ca. 410 kg Dampf für die stufenweise Kompression in (9") zu entnehmen, was mit Kondensateinspritzung (10") für die Bereitstellung von 500 kg Heizdampf (8") ausreicht.

Der vierten Desorbtionsstufe (16") wird die auf 52 % angereicherte und 148 °C heiße Lösung einer Flashverdampfung, bei eventuell gleichzeitiger rekuperativer Beheizung durch überschüssigen Desorbtionsdampf aus der zweiten Desorbtionsstufe (12"), bis zu einem Dampfdruck von 0,025 bar zugeführt. Der Flashdampf (17") aus der vierten Desorbtionsstufe (16") wird bei Umgebungstemperatur im Rekuperator (18") unter Abgabe der Kondensationswärme an die Umgebung (19") kondensiert.

Der Aufwand an Elektroenergie (20") für die Bereitstellung des Heizdampfes (18") zur Beheizung der ersten Stufe der Desorbtion (7") zum Zwecke der Abtrennung von insgesamt 2.000 kg Dampf aus 3.333 kg wässriger Lösung der Natronlauge mit einer Konzentration von 30 %, die dadurch in 1.333 kg reiche Lösung (4") mit einer Konzentration von 75 % umgewandelt wird, beträgt in diesem Ausführungsbeispiel ca. 287 MJ, entsprechend 80 kWh$_{el}$, bei theoretisch verlustfreier Prozessführung.

Zur Sicherstellung des Kompressionsdamfes (15") im Anfahrbetrieb dient im Beispiel ein Heißwasserdruckspeicher (21"), der mit 200 °C heißem Wasser gefüllt ist und den Anfahrdampf (15") für die Kompression durch Flashverdampfung und das Einspritzwasser zur Dampfkühlung (10") nach den Kompressionsstufen liefert. Gespeist wird der Speicher (21") durch Kondensat (6") aus der ersten Desorbtionsstufe (7").

Der Speicher (1") ist in Schotts (22") geteilt, die wiederum in je zwei Kammern (23", 24") geteilt sind. Die Schotts stehen für die Befüllung mit armer Lösung (2"), die Reihe der Kammern (23") für Wasser (3") und die im Beispiel kleineren Kammern (24") für die Speicherung der reichen Lösung (4") zur Verfügung.

Die erfindungsgemäße Unterteilung des Speichers (1") in Schotts und Kammern dient der Vermeidung von Leerraum im Speicher. Der geringste Leerraum wird erreicht, wenn ein Schott (22") und zwei Kammern (23") und (24") nur so gefüllt sind, so dass der Speicher (1") jederzeit sowohl beladen als auch entladen werden kann.

Beim Betrieb der Prozessstufe Absorbtion (A") des erfindungsgemäßen Verfahrens zum Zwecke der Rückgewinnung von Wärmeenergie oder technischer Arbeit mithilfe einer Expansionsmaschine (25") bzw. Elektroenergie über einen Generator (26") werden dem Speicher (1") reiche Lösung (4"), die über den Rekuperator (27") vorgewärmt werden, und Wasser (3"), das über den Rekuperator (28") vorgewärmt wird, entnommen und der Prozessstufe Absorbtion (A") zugeführt.

In diesem Ausführungsbeispiel wird die Prozessstufe Absorbtion durch die Dampfkessel (29", 30", 31"), die je in einen Absorbtions- und einen Siedewasserraum geteilt sind, und einen Dampfkessel (32"), der zusätzlich mit einem oder zwei Dampfüberhitzern ausgestattet ist, gebildet, und versorgt eine ein- oder mehrstufige Gegendruck-Dampfturbine (25") oder Entnahme-Kondensations-Dampfturbine (33") mit Frischdampf, im Beispiel 16 bar und 340 °C.

Dampferzeugung und -überhitzung erfolgen in den Kesseln (29") bis (32") durch rekuperative Übertragung von Wärme aus der Absorbtion von Wasserdampf durch reiche bzw. gestuft angereicherte Lösung an die Wasserteile der Kessel.

Der für die Inbetriebnahme der Prozessstufe Absorbtion erforderliche Dampf (31") wird dem Heißwasserspeicher (21") entnommen und dem Absorbtionsraum des Dampfkessels (32") zugeführt. Nach Erreichen des stabilen Betriebszustandes wird die kontinuierliche Dampfversorgung (39") durch die Gegendruckdampfturbine (25") gesichert.

Die Kessel (29") bis (32") sind lösungsseitig und wasserseitig gegenläufig in Reihe geschaltet. Dabei wird die reiche Lösung (4") mit einer Konzentration von 75 % dem Dampfkessel (32") zugeführt und von dort über die Dampfkessel (31") bis (29"), in denen sie im Druckniveau fallend gestuft Wasserdampf absorbiert, stufenweise in arme Lösung (2") mit einer Konzentration von 30 % umgewandelt.

Die Stufung der Absorbtion ergibt sich aus der Differenz der Konzentration, die es ermöglicht, 2 kg Wasserdampf pro kg Natronlauge durch Absorbtion zyklisch zu binden und durch Desorbtion wieder abzugeben. Die nach Kessel (29") vorliegende arme Lösung (2") wird aus der Prozessstufe Absorbtion über die Rekuperatoren (27") und (28") dem Speicher (1") zugeführt.

Die Stufung der Absorbtion ist im Beispiel durch folgenden Abfall der Konzentration der Lösung gekennzeichnet:

Dampfkessel (32)  : von 75,0 auf 49,7 %
Dampfkessel (31)  : von 49,7 auf 39,8 %
Dampfkessel (30)  : von 39,8 auf 34,1 %
Dampfkessel (29)  : von 34,1 auf 30,0 %

Das Wasser (3") wird über den Rekuperator (28") dem Siedewasserteil des Dampfkessels (29") zugeführt und dort durch rekuperative Zuführung von Absorbtionswärme aus dem Absorbtionsraum bei einem Druck von 1,7 bar verdampft. Dieser Dampf wird dem Kessel (30") als Absorbtionsdampf (34") zugeführt und dort unter diesem Druck von bereits abgemagerter Lösung absorbiert. Unter diesem Siededruck kann der Dampfkessel (30") Wasserdampf mit einem Druck von ca. 3,1 bar (35") produzieren und zur Absorbtion an den Dampfkessel (31") abgeben, die in diesem wiederum eine Dampferzeugung unter einem Druck von 6,3 bar (36") ermöglicht. Die Absorbtion dieses Dampfes im Dampfkessel (32") ermöglicht eine, bezogen auf die dem Beispiel zugrunde liegende Absorbtion von 2.000 kg Wasser, zyklische Dampferzeugung von 440 kg bei 16 bar (37") und eine Überhitzung des Dampfes auf 340 °C und danach in der Dampfturbinenanlage (25"), bei einer Entspannung ins Naßdampfgebiet bei einem Druck von 1 bar, die Auskopplung von 287 MJ, entsprechend 80 kWh technischer Arbeit, bei theoretisch verlustfreier Prozessführung.

Bei thermodynamischer Optimierung erscheint bei in der Praxis verlustbehaftetem Betrieb, bezogen auf die in der Prozessstufe Desorbtion aufgewendete Elektro-energie (20") für die Dampfkompression (9"), ein Elektroenergie-Rüdkgewinnungsgrad von mehr als 80 % möglich.

Die in diesem Beispiel vorgestellte Prozesskombination ermöglicht erfindungs-gemäß, alternativ oder zusätzlich zum Einsatz von Elektroenergie, als Antriebsenergie der Stoff- und Energieumwandlung zum Zwecke der Energiespeicherung und bedarfs-gerechten Wiederfreisetzung auch Wärmeenergie einzusetzen.

Für diesen Fall ist der Heißwasserspeicher (21") mit einem Rekuperator (38") ausgestattet, der die Wärmeenergie heißer Abgase aus Industrieanlagen und anderen Wärmequellen, insbesondere der Abgas- und Kühlwasserabwärme von Verbrennungsmotoranlagen, an das Wasser im Heißwasserkessel (21") überträgt und Dampf erzeugt, der unter dem für die Desorbtionsstufe (7") erforderlichen Heizdampfdruck zugeführt wird und die Prozessstufe Desorbtion wie beschrieben, anstelle von Elektroenergie, antreibt. Wird die Prozessstufe Absorbtion betrieben zum Zwecke der Auskopplung von Dampf, Heizwasser oder Warmwasser, dann kann die Wärmeenergie in Form von Dampf der Turbine (25") entnommen werden, oder die Kessel (29") bis (31") werden wasserseitig nicht wie bei der Stromerzeugung parallel, sondern in Reihe geschaltet, so dass sich das der Absorbtionsstufe (29") zugeführte Wasser stufenweise erwärmt und aus der Absorbtionsstufe (32") einer Heiz- und Warmwasserversorgung zugeführt werden kann. In dieser Prozessvariante kann die Absorbtionstufe (29") auch mit Dampf aus unter Vakuum siedendem Wasser (40"), insbesondere Kühlwasser oder Meerwasser, betrieben werden. Das so extern zugeführte dampfförmige Wasser muss im Zuge der folgenden Desorbtion aus dem Kreisprozess als Destillat abgeführt und zweckmäßiger Weise einer Verwertung in der Landwirtschaft oder Trinkwasserbereitung zugeführt werden.

Der Desorbtionsdampf der Desorbtionsstufe (14") wird dann allerdings nicht mit 1 bar dem Dampfkompressor (9"), sondern einem zusätzlichen gestuften Desorbtionsprozess, bei dem die Desorbtion in den Desorbtionsstufen (41"), (42"), (43") und (44") unter Vakuum betrieben wird und der Desorbtionsdampf der Stufe (44") bei Umgebungstemperatur in (18") kondensiert oder der Kondensationsturbine zugeführt.

Bei ausreichender Temperaturdifferenz zwischen der Vakuumverdampfung in (40") und der Kondensation in

EP 2 917 515 B1

(18") ist es erfindungsgemäß, den in der Absorbtionsstufe (32") erzeugten Dampf als Heizdampf in der Desorbtionsstufe (41") einzusetzen und sowohl die Absorbtionsstufe A" als auch die Desorbtionsstufe C" wie beschrieben zu betreiben.

Ausführungsbeispiel 3

Das Beispiel beschreibt eine gestufte Desorbtion und Absorbtion über zwei Konzentrationsbereiche, den der primären und den der sekundären Desorbtion, wie in Fig.3 gezeigt, sowie durch eine thermodynamisch-rechnerische Abschätzung und beschreibt zudem anhand der Figuren 4 bis 6, wie die Integration eines Laugekreisprozesses in einen Dampfkraftprozess schematisch erfolgt.

Im Beispiel wird in der sekundären Desorbtion die Konzentration der Lauge von $x_1$ = 0,40 kg NaOH/kg Lauge (arme Lauge) auf eine Konzentration von $x_2$ = 0,52 kg NaOH/kg Lauge (angereicherte Lauge) angehoben. Ein Teilstrom der angereicherten Lauge wird danach in der primären Desorbtion weiter bearbeitet, indem die Konzentration der Lauge von $x_2$ = 0,52 kg NaOH/kg Lauge auf $x_3$ = 0.78 kg NaOH/kg Lauge angehoben, wird.

Als Wärmeenergie für die rekuperative Beheizung der primären Desorbtion steht im Beispiel die Abgas- und Kühlwasserwärme eines Dieselmotorkraftwerkes mit einer elektrischen Leistung von 2 MW oder komprimierter Wasserdampf mit folgenden Parametern zur Verfügung:

|  |  | **Motorabgas** | **Kühlwasser** | **Komprimierter Wasserdampf** |
|---|---|---|---|---|
| **Massestrom** | kg/h | 11.500 | 13.000 | 11.500 |
| **Eintrittstemperatur** | °C | 500 | 120 | 500 |
| **Austrittstemperatur** | °C | 60 | 60 | 60 (Kondensat) |
| **Druck** | bar | 5 | 5 | 2 |
| **Nutzbare Enthalpiedifferenz** | kJ/kg | 5.670.000 | 2.700.000 | 37.202.500 |
| **Davon:** |  |  |  |  |
| **Fühlbare Wärme** | kJ/kg | 5.670.000 | 2.700.000 | 11.882.950 |
| **Kondensationswärme** | kJ/kg | - | - | 25.319.550 |
| **Kompressionsenergie** | kJ/kg | - | - | 9.211.500 |

Durch schrittweise rekuperative Übertragung der fühlbaren Wärme des Abgases werden die Siededrücke und -temperaturen der Lauge im vorgegebenen Konzentrationsbereich von $x_2$ bis $x_3$ wie folgt eingestellt.

| Primäre Desorbtionsstufe | 1 | 2 | 3 | 4 | 5 | Summe |
|---|---|---|---|---|---|---|
| **Siededruck in bar** | 50,0 | 10,0 | 2,0 | 0.35 | 0.02 | |
| **Siedebeginn °C** | 325 | 235 | 165 | 110 | 60 | |
| **Siedeende °C** | 430 | 325 | 235 | 165 | 110 | |
| **Wärmezufuhr in MJ/h** | 2.078 | 1.152 | 1.152 | 876 | 617 | 5.407 |

Bei einer Konzentration der reichen Lauge (RL) von $x_3$ = 0,78 kg NaOH/kg Lauge beträgt die spezifische Laugemasse 1,282 kg Lauge /kg NaOH, während bei einer Konzentration der angereicherten Lauge (AL*) von $x_2$ = 0.52 kg NaOH/kg Lauge die spezifische Laugemasse 1.923 kg Lauge/kg NaOH erreicht, d.h. in jeder Desorbtionsstufe der primären Desorbtion werden 0,641 kg Wasser/kg NaOH (DD1/1 - 1/5) verdampft.

Den primären Desorbtionstufen werden dementsprechend die Massenströme im Verhältnis: $m_{AL*} : m_{RL} : m_{DD1}$ = 1,923 : 1,282 : 0,641, d.h. 3 : 2 : 1 (kg/kg NaOH) zu- bzw. abgeführt.

Die Verdampfungsleistung der jeweiligen Desorbtionsstufe in kg Wasser/h ergibt sich bei erfindungsgemäßer Ausführung nach Figur 4 aus der Differenz zwischen der der jeweiligen Stufe mit Abgas bzw. Motorkühlwasser und der eingetragenen angereicherten Lauge zugeführten Wärme gegenüber der mit dem primären Desorbtionsdampf (DD1/1 - 1/5) und der reichen Lauge abgeführten Wärme.

Dabei gilt erfindungsgemäß, dass die reiche Lauge mit der für das Siedeende in der Stufe angegebenen Temperatur aus der jeweiligen Desorbtionsstufe abgeführt und dieser angereicherte Lauge (AL*) aus dem Speicher mit einer Temperatur von 15 °C über einen Rekuperator im Wärmeaustausch zur reichen Lauge (RL) zugeführt wird. Bei

17

einer mittleren Temperaturdifferenz von 5 K resultiert aus der rekuperativen Wärmeübertragung von der RL an die Al$^x$ ein spezifischer Wärmeverlust von lediglich

$$\Delta h_{Reku} = m_{RL} \times c_{RL} \times \Delta t = 1{,}28 \times 2{.}6 \times 5 = 17 \text{ kJ/kg NaOH.}$$

Die restliche der jeweiligen Desorbtionsstufe zugeführte Wärme wird mit dem primären Desorbtionsdampf (DD1/1 -1/5), der unter dem Desorbtionsdruck und einer Temperatur, die dem Siedebeginn der Desorbtionsstufe entspricht, aus der jeweiligen Desorbtionsstufe abgeführt wird.

Unter den vor genannten Parametern der ersten primären Desorbtionsstufe (PD1) ist der Desorbtionsdampf (DD1/1) durch einen Druck von 50 bar und eine Temperatur von 325 °C und dementsprechend durch eine Enthalpiedifferenz von

$$\Delta h_{DD1/1} = 2999 \text{ kJ/kg}$$

gekennzeichnet.

Der spezifische Wärmebedarf für die Desorbtion des DD1/1 errechnet sich somit entsprechend

$$\Delta h_{PD1} = (m_{RL} : m_{DD1}) \times \Delta h_{REKU} + \Delta h_{DD1/1}$$

zu

$$= (1{.}282 : 0{,}641) \times 17 + 2999 = 3033 \text{ kJ/kg DD1/1.}$$

Bei einer Wärmezufuhr von 2.078.000 kJ/h errechnet sich so eine Desorbtionsdampf-erzeugung in der ersten primären Desorbtionsstufe (DD1/1) von

$$M_{DD1/1} = 685 \text{ kg/h.}$$

Unter den Bedingungen dieses Ausführungsbeispieles errechnen sich folgende primären Desorbtionsdämpfe:

| | Heizwärme | $p_{DD1}$ | $t_{DD1}$ | $\Delta h_{DD1}$ | $\Delta h_{PD}$ | $M_{DD1}$ | $\Delta H_{DD1}$ |
|---|---|---|---|---|---|---|---|
| | kJ/h | Bar | °C | kJ/kg | kJ/kg | kg/h | kJ/h |
| **1. Stufe PD1** | 2.078.000 | 50 | 325 | 2.999 | 3.033 | 685 | 2.054.315 |
| **2. Stufe PD2** | 1.152.000 | 10 | 235 | 2.908 | 2.942 | 392 | 1.139.936 |
| **3. Stufe PD3** | 876.000 | 2 | 165 | 2.799 | 2.833 | 309 | 864.891 |
| **4. Stufe PD4** | 684.000 | 0,35 | 110 | 2.703 | 2.737 | 250 | 675.750 |
| **5. Stufe PD5** | 617.000 | 0,02 | 60 | 2.613 | 2.613 | *233 | *608.829 |
| $\Sigma$ | | | | | | 1.869 | 4.734.892 |
| **6. Stufe PD6** | 2.700.000 | 0,02 | 60 | 2.613 | 2647 | *1.020 | |
| **\*2.665.319** | | | | | | | |
| $\Sigma\Sigma$ **PD** | 8.107.000 | | | | | 2.889 | 7.400.211 |

Durch die erfindungsgemäße isobare Wärmeübertragung der fühlbaren Wärme des Motorabgases und des Motorkühlwassers an die primären Desorbtionsstufen PD1 bis PD6 und der rekuperativen Wärmeübertragung der fühlbaren Wärme der abzuführenden RL an die zuzuführende AL\* gelingt es 90 % der den Desorbtionsstufen zugeführten Wärme an die Desorbtionsdämpfe DD1 bis DD6 zu übertragen. Die Stoffströme der primären Desorbtion errechnen sich so zu:

| Zugeführt | Abgeführt | |
|---|---|---|
| AL* | RL | DD1 |
| Kg/h | kg/h | kg/h |
| 8667 | 5778 | 2889 |

Der primären Desorbtion können somit 8667 kg/h AL* zugeführt und daraus 5778 kg/h RL und 2889 kg/h DD1 erzeugt werden.

Die Kühlwasser des Motors wird vom Motor mit 120°C einer gesonderten primären Desorptionsstufe PD 6, die unter einem Dampfdruck von 0.02 bar arbeitet, zugeführt, dort rekuperativ auf 60 °C abgekühlt und zum Motor zurückgeführt.

Während die Desorbtionsdämpfe DD1 bis DD4 erfindungsgemäß der sekundären Desorbtion als Heizdampf (HD) zugeführt und dort zu diesem Zwecke kondensiert werden, wird die Kondensation von DD5 und DD6 unter Abgabe der Wärme an die Umgebung kondensiert.

Die der sekundären Desorbtion aus der primären Desorbtion zur Verfügung stehende Heizwärme entspricht somit 4.126.063 kJ/h.

Bilanziert ergibt sich, dass von der der primären Desorbtion zugeführten Abwärme des Motorkraftwerkes (Abgas und Kühlwasser) ca. 51% in Form von Desorbtionsdampf an die sekundäre Desorbtionsstufe als Heizdampf abgeführt werden, während ca. 40% rekuperativ an die Umgebung und ca. 9% an das Tanklager abgeführt werden müssen.

In der sekundären Desorbtion wird erfindungsgemäß arme Lauge (AL) mit einer Konzentration von $x_1 = 0{,}40$ kg NaOH/kg Lauge zu angereicherter Lauge (AL*) mit einer Konzentration $x_2 = 0{,}52$ kg NaOH/kg Lauge aufgearbeitet. Die Desorbtion erfolgt wie bei der primären Desorbtion in 6 Druckstufen, deren Desorbtionsdruck von der Kondensationstemperatur des aus der primären Desorbtion zugeführten Desorbtionsdämpfe (DD1/1 - 1/5) bestimmt wird.

Dabei entstehen aus 2,50 kg armer Lauge (AL) 1,923 kg angereicherte Lauge (AL*) und 0,577 kg sekundärer Desorbtionsdampf (DD2/1 - 2/5) der Druckstufen 18,0/5,0/ 2,5/ 1.0 und 0,1 bar, der gemeinsam mit dem primären Desorbtionsdampf für die Beheizung der sekundären Desorbtionsstufen, wie in Figur 4 gezeigt, eingesetzt und dort kondensiert wird.

Der DD2/6 aus der letzten sekundären Desorbtionsstufe wird bei Umgebungstemperatur kondensiert und die Kondensationswärme an die Umgebung abgegeben.

Erfindungsgemäß wird die AL* und das Dampfkondensat mit der Temperatur des Siedebeginns aus der jeweiligen Desorbtionsstufe abgeführt und deren fühlbare Wärme rekuperativ an die aus dem Speicher mit 15 °C zugeführte AL übertragen. Die zugeführte AL kann die fühlbare Wärme der abzuführenden AL* und des Dampfkondensates vollständig aufnehmen, so dass der jeweiligen sekundären Prozessstufe durch die abzuführenden Massenströme nur Rekuperationsverluste in Höhe von 42 kJ/kg NaOH bzw. 72 kJ/kg DD2 verloren gehen und fast die gesamte Kondensationswärme der primären und sekundären Desorbtionsdämpfe (DD1/1 - 1/5 bzw. DD2/1 - 2/5) als Desorbtionwärme zur Verfügung steht.

Daraus ergibt sich folgende Bilanz der sekundären Desorbtion (DS2).

| | Druck DD1/DD2 | DD1 | Siedetemp. Beginn/Ende | $\Delta hDD2$ | HW | DD2 | $\Sigma\Delta H$ DD2 |
|---|---|---|---|---|---|---|---|
| | Bar | kJ/h | °C | kJ/h | kJ/kg DD2 | kg/h | kJ/h |
| **1. Stufe** | 50/18 | 2.054.315 | 235/265 | 2872 | 2944 | 698 | 2.004.074 |
| **2. Stufe** | 18/5 | 1.139.936 | 180/210 | 2812 | 2884 | 1.090 | 3.144.592 |
| **3. Stufe** | 5/1 | 864.891 | 130/150 | 2736 | 2808 | 1.370 | 3.929.971 |
| **4. Stufe** | 1/0,2 | 675.750 | 80/100 | 2647 | 2719 | 1.415 | 4.424.070 |
| **5. Stufe** | 0,2/0,02 | - | 60/75 | 2600 | 2672 | 1.402 | *3.745.505 |
| $\Sigma$ | | | | | | 5.975 | |

Die Produkte der sekundären Desorbtion sind somit AL* und Wasserkondensat im Verhältnis 1.923 zu 0,58. Bei einer Desorbtion von 5975 kg/h DD2 in der sekundären Desorbtion werden 19.810 kg/h AL* produziert. Dafür müssen 25.795 kg/h AL zugeführt werden.

Nach "Abschöpfung" der Exergie aus der in Höhe von 8.107.000 kJ/h insgesamt den Desorbtionsstufen zugeführten Gas- und Motorabwärme werden 7.019.653 kJ/h, das sind ca. 87%, durch Kondensation von DD1 und DD2 an die Umgebung abgegeben. Die Verluste über die abgeführten Massenströme AL*, RL und Wasserkondensat betragen ca. 13 %.

Die Stoffbilanz in kg/h errechnet sich zu

| $\Sigma$ | I | DD2 | DD1 | | |
|---|---|---|---|---|---|
| Zu | Ab | | Zu | Ab | |
| AL | AL* | W | AL* | RL | W |
| 25.758 | 19.810 | 5.975 | 8.667 | 5.778 | 2.889 |

Für die Rückgewinnung der eingekoppelten Energie durch Absorbtion werden im Beispiel somit 19.810 kg AL*, 5.778 kg RL pro Stunde zur Verfügung gestellt, die insgesamt 8.864 kg Wasserdampf absorbieren können.

Die Absorbtion wird erfindungsgemäß vorzugsweise ebenfalls in Druckstufen in zwei Schritten, der primären und der sekundären Absorbtion realisiert, die dampfseitig in Reihe geschaltet sind und so schrittweise den Dampfdruck und damit die spezifische Dampfenthalpie bis auf den Zustand des angestrebten Frischdampfes, der der Dampfturbine zugefahren wird, erhöhen. In der primären Absorbtion wird AL* zu AL und in der sekundären Desorbtion RL in AL* umgewandelt.

Erfindungsgemäß wird der ersten Stufe der Absorbtion Entnahmedampf als Kreislaufdampf (KLD) aus der Turbine mit Sattdampfzustand unter einem Druck von 0,4 bar und einer Enthalpiedifferenz von $\Delta h$ = 2636 kJ/kg, der in der Turbine technische Arbeit geleistet hat, und AL* sowie Kondensat als Speisewasser zugefahren, das die Absorbtionswärme rekuperativ aufnimmt und dabei verdampft.

Unter diesem Druck wird der Dampf von AL* absorbiert, die sich dadurch in AL umwandelt. Die spezifische Masse der AL* beträgt 1,923 kg/kg NaOH und die der AL 2,5 kg/kg NaOH. Pro kg NaOH kann die AL* 0,577 kg Dampf absorbieren.

Die Siedetemperatur des Wassers beträgt unter diesen Bedingungen in der ersten Absorbtionsstufe 100 °C. Vor der Absorbtion erfolgt eine rekuperative Wärmeübertragung von der AL an die zugeführte AL* und das Wasser. Die durch die Ableitung der AL gegebenen Verluste an fühlbarer Wärme reduzieren sich dadurch auf 78 kJ/kg absorbiertem Dampf.

Die erste Stufe der Absorbtion produziert einen Frischdampf (FD1) unter Sattdampfzustand und einem Druck von 1 bar mit einer spezifischen Enthalpiedifferenz von

$$\Delta h = 2676 \text{ kJ/kg.}$$

Daraus errechnet sich ein spezifischer FD1-Massestrom von

$$m_{FD1}{}^* = (2636 - 78) : 2676 = 0{,}956 \text{ kg/kg KLD}$$

Der FD1 wird erfindungsgemäß der 2. Absorptionsstufe zugefahren und dort ebenfalls von AL* absorbiert. Diese 2. Absorbtionsstufe produziert den Frischdampf 2 (FD2) mit einem Druck von 2,7 bar und einem $\Delta h$ = 2720 kJ/kg, was zu einer Produktion von FD2 in Höhe von

$$m_{FD2}{}^* = ((0{,}956 \times 2676) - 78) : 2720 = 0{,}912 \text{ kg FD2/kg KLD}$$

führt.

Die Verwendung des FD2 als Absorbtionsdampf in einer 3. Absorbtionsstufe führt zum FD3 unter einem Druck von 8 bar mit einem $\Delta h$ = 2768 kJ/kg, woraus sich ein FD3-Massestrom von

$$m_{FD3}{}^* = ((0{,}912 \times 2720) - 78) : 2768 = 0{,}868 \text{ kg FD3/kg KLD}$$

errechnet.

Der FD4 wird als Absorbtionsdampf in einer 4. Absorbtionsstufe zur Erzeugung von Frischdampf (FD) mit einem Druck von 23 bar und einer Sattdampfenthalpie von $\Delta h = 2801$ kJ/kg verwendet. Es errechnet sich ein FD4 Massestrom von

$$m_{FD4} = ((0{,}868 \times 2768) - 78) : 2801 = 0{,}830 \text{ kg FD3/kg KLD}.$$

Nach der 4. Absorbtionsstufe soll der FD4 durch Absorbtionswärme auf 370 °C auf eine $\Delta h$ 3175 kJ/kg überhitzt werden, wofür ein Teilstrom des FD4 verwendet wird. Der Dampfbedarf dafür errechnet zu

$$FD4* = ((3175 - 2801) + 78) : 2801 = 0{,}161 \text{ kg FD4/kg KLD}$$

Stoffbilanz Absorbtion in kg/h

| | Zugeführt | | | Abgeführt | | |
|---|---|---|---|---|---|---|
| | Dampf | RL | AL* | AL* | AL | FD |
| **1. Stufe** | 1.800 | - | 5.960 | - | 7.760 | 2.025 |
| **2. Stufe** | 1.955 | - | 6.470 | - | 8.425 | 3.285 |
| **3. Stufe** | 3.062 | - | 10.135 | - | 13.197 | 3.454 |
| **4. Stufe** | 3.080 | 6.160 | | 9.240 | - | 2.710<br>+ DD1 685<br>$\Sigma$ 3.395<br>an Überhitz. 435<br>an Turbine 2.960<br>an AD-Kondens. 1.160 |
| | 9.807<br>Ausgetragen<br>mit AL* 3080<br>mit AL 6.817 | 6.160 | 22.565<br>aus 4.St. 6.160<br>aus Speicher 16.405 | | 29.382 | |

Die zum Zwecke der Energierückgewinnung durch Absobtion durchzuführende Beladung der in der primären und sekundären Desorbtion stündlich produzierten RL und AL* erfordert die Bereitstellung von 8.864 kg Dampf/h.

Im Beispiel wird während der Absorbtion die sekundäre Desorbtion abgestellt und der DD1 aus den primären Desorbtionstufen D2 bis D6 den Druckstufen der Absorbtion zugefahren, während der DD1 aus der ersten primären Desorbtionstufe in den aufgeladenen Frischdampf zwischen Absorbtion und Überhitzung zugeführt wird.

Der Turbine werden so insgesamt 2.960 kg Frischdampf mit einem Druck von 23 bar, einer Temperatur von 370 °C und mit $\Delta h = 3175$ kJ/kg zugefahren. Davon müssen der Turbine bei einem Druck von 0,4 bar 2000 kg/h als Sattdampf mit einer Feuchte von 10 % entnommen werden, wovon dann 1800 kg/h als Kreislaufdampf der Absorbtion zugeführt werden. 960 kg FD/h verbleiben in der Turbine und werden bis auf einen Druck von 0,04 bar und eine Dampffeuchte von 15 % entspannt. Das technische Arbeitsvermögen der Turbine errechnet sich zu ca. 700 kWh/h.

Die zu Beginn des Beispiels definierte alternative Variante des erfindungsgemäßen Verfahrens mit Dampfkompression ("komprimierter Wasserdampf') ist gegenüber der vorstehend erläuterten Dieselmotorkraftwerksvariante gekennzeichnet durch ein mehr als doppelt so großes Angebot an fühlbarer Wärme und mehr als das neunfache an Kondensationswärme, die als Äquivalent für die Motorkühlwärme angesehen wird. Der Gegendruckdampf der Dampfturbine mit 0,4 bar wird einstufig komprimiert auf 2,0 bar. Der Dampfmassestrom wurde im Vergleich zum Abgasmassestrom des Motorkraftwerkes mit 11.500 kg/h festgesetzt. Die Kühlung des komprimierten Dampfes erfolgt analog zur Abgaskühlung, d.h. durch Dampfkühlung werden die in den Druckstufen der primären Desorbtion 2,1-fach höhere Desorbtionsmasseströme und damit dementsprechend höhere Ausbeuten an RL erzielt. Der primären Desorbtion werden 18.200 kg AL* zugeführt und abgeführt werden 12.134 kg RL und 6.066 kg Desorbtionsdampf mit gleicher Druck- und Temperaturstaffelung wie in der Variante Motorkraftwerk.

Der Dampf liegt nach Auskühlung mit einem Druck von ca. 2 bar vor. Damit ist seine Kondensationswärme geeignet für die Beheizung der primären und sekundären Desorbtion, so dass RL und AL* im selben Verhältnis hergestellt werden kann, wie beim Motorbetrieb, d.h. der Dieselmotorkraftwerksvariante.

Erfindungsgemäß wird die Dampfbilanz gesichert, in dem vorzugsweise die Absorbtion zeitgleich mit der primären Desorbtion betrieben und der DD1 nicht zum Betreiben der sekundären Desorbtion, sondern, neben eventuell weiterem externem Dampf, als Absorbtionsstützdampf (ASD) eingesetzt wird.

**Bezuaszeichen liste**

A'    erste Prozessstufe (Desorbtion)
B'    zweite Prozessstufe (Absorbtion)
C'    dritte Prozessstufe (externe Vakuumverdampfung von Umgebungswasser)

1'    Arme Lösung (arme Lauge)
2'    Wärmeträgerkreislauf (Druckwasserkreislauf)
3'    Rekuperator
4'    Reiche Lösung (reiche Lauge)
5'    Wärmepumpe
6'    Rekuperator
7'    Solarwärme/Abwärme
8'    Rekuperator
9'    Wasserdampf
10'    Kondensator
11'    Wasserkondensat
12'    Tank für Wasser
13'    Tank für reiche Lösung
14'    Wasserpumpe
15'    reiche Lösung
16'    Rekuperator (Wasservorwärmung)
17'    Vorwärmung reiche Lösung
18'    Druckwasserleitung
19'    Zuführung reiche Lösung
20'    Desorber
21'    Tank für arme Lösung
22'    Rekuperator/Absorberkühlung
23'    Druckwasserkreislauf
24'    Absorber
25'    Zuführung Absorbtionsdampf
26'    Vakuumverdampfer
27'    Umgebungswasser
28'    Flashverdampfung
29'    ausgekühltes Umgebungswasser
30'    Ableitung von Umgebungswasser
31'    Externer Flashdampf
32'    Dampftrommel
33'    Dampfturbinenanlage
34'    Heizwärmeversorgung

A"    Prozessstufe Absorbtion
B"    Prozessstufe Druckdesorbtion
C"    Prozessstufe Vakuumdesorbtion

1"    Speicher
2"    Arme Lösung (arme Lauge)
3"    Wasser
4"    Reiche Lösung (reiche Lauge)

| | |
|---|---|
| 5" | Rekuperator |
| 6" | Heizdampfkondensat |
| 7" | Erste Desorbtionsstufe |
| 8" | Heizdampf |
| 9" | Mehrstufige Dampfkompression |
| 10" | Kondensateinspritzung |
| 11" | Angereicherte Lösung |
| 12" | Zweite Desorbtionsstufe |
| 13" | Desorbtionsdampf |
| 14" | Dritte Desorbtionsstufe |
| 15" | Desorbtionsdampf/Anfahrdampf 1 bar |
| 16" | Vierte Desorbtionsstufe (Flashverdampfung) |
| 17" | Flashdampf |
| 18" | Rekuperator |
| 19" | Wärmesenke |
| 20" | Elektroenergie-Zuführung |
| 21" | Heißwasserdruckspeicher |
| 22" | Speicherschotts |
| 23" | Speicherkammern für Wasser |
| 24" | Speicherkammern für reiche Lösung |
| 25" | Erste Expansionsmaschine |
| 26" | Elektrogenerator |
| 27" | Rekuperator |
| 28" | Rekuperator |
| 29" | Dampfkessel |
| 30" | Dampfkessel |
| 31" | Dampfkessel |
| 32" | Dampfkessel und -überhitzer |
| 33" | Zweite Expansionsmaschine |
| 34" | Absorbtionsdampf |
| 35" | Absorbtionsdampf |
| 36" | Absorbtionsdampf |
| 37" | Frischdampf |
| 38" | Abwärme-Rekuperator |
| 39" | Anfahrdampf Absorbtion aus Turbine |
| 40" | Dampf aus unter Vakuum siedendem Wasser |
| 41" | Vakuumdestillation |
| 42" | Vakuumdestillation |
| 43" | Vakuumdestillation |
| 44" | Vakuumdestillation |
| 45" | Desorbtionsdampf |
| 46" | Anfahrdampf Absorbtion aus Speicher |
| | |
| 11 | Wasser-Dampf-Kraftprozess |
| 111 | Speisepumpe |
| 11.2 | Dampfkessel |
| 11.3 | Elektrogenerator mit Entnahme-Gegendruckturbine |
| 11.4 | Entnahmedampf |
| 11.5 | Heizdampfkondensator |
| 11.6 | Abdampf |
| 11.7 | Abdampf-Kondensator |
| 11.8 | Bedarfsgerechte Ableitung von Elektroenergie |
| 11.9 | Frischdampf |
| 12 | Sorbtionskreisprozess |
| 12.1 | Desorber |
| 12.1.1 | primäre Desorbtion |
| 12.1.2 | sekundäre Desorbtion |
| 12.2 | Dampferzeugung in der Absorbtion |

12.3    Laugekreislauf
12.4    Absorbtionsdampf
12.5    Kondensatableitung
12.6    Abgas
12.7    Komprimierter Heizdampf
12.8    Zuführung volatile regenerative Energie
12.9    Frischdampf aus Absorbtion
12.10   Heizdampf aus Desorbtion
13      Arbeitsmittelspeicher
13.1    Speicher für Wasserkondensat
13.2    Speicher für arme Lauge
13.3    Speicher für angereicherte/reiche Lauge
14      Solar-/Geothermie
14.1    solare Strahlung
14.2    Abwasser/Salzwasser
14.3    Flashdampf
14.4    Wärmeträger

21      Primäre Desorbtion
21.1    1. primäre Desorbtionsstufe
21.2    2. primäre Desorbtionsstufe
21.3    Angereicherte Lauge
21.4    Reiche Lauge
22      Sekundäre Desorbtion
22.1    1. sekundäre Desorbtionsstufe
22.2    2. sekundäre Desorbtionsstufe
23      Schrittweise Abgas- oder Heizdampfkühlung
24      Beheizung der sekundäre Desorbtionsstufen durch Dampfkondensation
25      Vorwärmung angereicherter Lauge
26      Vorwärmung arme Lauge
27      Arme Lauge
28      Dampfkondensat
29      Angereicherte Lauge

31      1. Absorbtionsstufe
32      2. Absorbtionsstufe
33      Dampfüberhitzer
34      Prozessintegrierte Gegendruck-Dampfturbinenanlage
35      Laugen- und Speisewasservorwärmung
36      Interner Absorbtionsdampf
37      Frischdampf
38      Gegendruckdampf
39      Desorbtionsdampf

**Patentansprüche**

1. Verfahren zur Umwandlung und Speicherung von Energie, und deren bedarfsgerechte Rückgewinnung in Kraft-, Heiz- und Heiz-Kraft-Werken über Wasserdampf-Sorptionsprozesse mit Laugen, wobei eine Lauge, vorzugsweise Natronlauge, in ihrer Konzentration durch zeitversetzte kontinuierliche Absorption (B') und Desorption (A') von Wasserdampf in vorgegebenen Grenzen zyklisch geändert wird, indem

   • die Konzentration der Lauge (1') unter ein- oder mehrstufigen Siededrücken erhöht wird, indem diesen Desorbtionsstufen (20') externe Energie (7') über Wärmeträger (2') in Form von fühlbarer Wärme oder Kondensationswärme rekuperativ (8') zugeführt wird und die Kondesationswärme dabei anfallender Desorbtionsdämpfe ebenfalls zur Beheizung von Desobtionsstufen verwendet und/oder externer Verwendung zugeführt wird,
   • der durch Desorbtion angereicherten Lauge (4', 15', 19') erneut Wasserdampf (25') zugeführt und die durch Absorbtion (24') freigesetzte Wärme rekuperativ an einen Wärmeträger abgeführt wird, der unter gegenüber dem Absorbtionsdruck erhöhtem Druck verdampft oder dessen fühlbare Wärme in einem Dampfprozess (32') oder in einer Flashverdampfung über Absorbtionsdruck zur Produktion von dampfförmigen Arbeitsmittel genutzt wird, dass in einer Expansion (33') technische Arbeit, vorzugsweise für die Erzeugung von Elektroenergie, leistet,
• die Produkte arme (1') und angereicherte Lauge (4') sowie Wasser (11') des Sorbtionsprozesses hauptsächlich unter Umgebungsdruck getrennt von einander in einem Speicher (21, 13', 12') gelagert und von dort bedarfsgerecht den Desorbtions- und Absorbtionsstufen (A', B') zugeführt werden,
• wobei mindestens ein Teil des Desorbtionsdampfes komprimiert (5') und danach als Heizdampf zur rekuperativen Übertragung von Wärme (6') in der Desorbtion eingesetzt wird, während die Kondensationswärme (10') des aus dem Prozess abzuführenden Desorbtionsdampfes an die Umgebung oder einen prozessinteren Wärmespeicher oder einen Wärmeträger (9') abgeführt wird.

2. Verfahren nach Anspruch 1, wobei die Kondensationswärme des aus dem Prozess abzuführenden Desorbtionsdampfes an die Umgebung oder einen prozessinteren Warmwasserspeicher, oder einen Druckwasserkreislauf, abgeführt wird

3. Verfahren nach Anspruch 1 oder 2, wobei die Desorbtion mindestens über zwei Konzentrationsbereiche der Lauge erfolgt, wobei die fühlbare Wärme des Wärmeträgers hauptsächlich zur Beheizung der Desorbtion im höheren Konzentrationsbereich und eventuell zur Verfügung stehende Kondensationswärme zur Beheizung der Desorbtionstufen im niedrigerem Konzentrationsbereich verwendet wird.

4. Verfahren nach Anspruch 1, wobei die Absorbtion unter rekuperativer Übertragung der Absorbtionswärme an einen Wärmeträger oder einen Dampfprozess über einen oder mehrere Konzentrationsbereiche und über eine oder mehrere Druckstufen so erfolgt, dass der durch isotherme Verdampfung oder Flashverdampfung erzeugte Frischdampf durch einen gegenüber dem Absorbtionsdruck höheren Druck gekennzeichnet ist.

5. Verfahren nach Anspruch 1 oder 4, wobei durch Absorbtionswärme mit erhöhtem Druck erzeugter Wasserdampf als Absorbtionsdampf so eingesetzt wird, dass der Dampfdruck in den Absorbtionsstufen schrittweise angehoben wird und die Absorbtionstemperatur die Produktion von Frischdampf unter hohem Druck ermöglicht.

6. Verfahren nach einem der Ansprüche 1, 4 und 5, wobei der durch rekuperative Übertragung der Absorbtionswärme erzeugte Frischdampf unter Abgabe von technischer Arbeit expandiert und der danach vorliegende Dampf als Absorbtionsdampf verwendet wird.

7. Verfahren nach einem der Ansprüche 1 und 4 bis 6, wobei die Dampfbilanz der Absorbtion geschlossen wird durch externen Dampf aus technischen Prozessen und/oder aus Flashverdampfung von Wasser aus dem prozessinterene Warmwasserspeicher, Kühl- oder Umgebungs- bzw. Meerwasser.

8. Verfahren nach einem der Ansprüche 1 bis 7, wobei eine Lauge, vorzugsweise Natronlauge, in die Dampfkreisläufe der Kraft- und Heiz-Kraft-Prozesse integriert wird, deren Konzentration durch Absorbtion und Desorbtion von Wasserdampf in vorgegebenen Grenzen zyklisch geändert wird, indem

• ein mehrstufiger Desorbtionsprozess, der unter direkter und/oder rekuperativer Zuführung von fühlbarer Wärme und/oder Kondensationswärme die Konzentration der Lauge erhöht, zwischen Dampferzeuger, Dampfturbine und den Heiz- bzw. Abdampfkondensatoren installiert wird,
• ein mehrstufiger Absorbtionsprozess parallel zum Dampfkessel oder an dessen Stelle in den Wasser-Dampf-Kreisprozess eingeordnet wird, der in seiner ersten Stufe Dampf aus der Dampfturbine und danach in den folgenden Stufen selbst erzeugten Dampf absorbiert,
• in den Dampfkreisprozess ein bei Umgebungsdruck und -temperatur oder darüber arbeitender Produktspeicher für die Desorbtionsprodukte, reiche, arme und angereicherte Lauge sowie Wasser, zwischen dem Desorbtions- und Absorbtionsprozess angeordnet wird.

9. Verfahren nach 8, wobei

• die Desorbtion des Wasserdampfes aus der Lauge in zwei Schritten erfolgt, wobei in der primären Desorbtion die fühlbare Wärme der für die Desorbtion eingesetzten Wärmeträger, vorzugsweise von Abgas oder komprimiertem Wasserdampf, an die Lauge rekuperativ übertragen wird, während in der sekundären Desorbtion der Desorbtionsdampf aus der primären Desorbtion und aus der sekundären Desorbtion selbst zur Beheizung der unter gestuften Drücken arbeitenden Desorbtionsstufen verwendet wird, und/oder

• die Druckstufen der primären und sekundären Desorbtion in vorgegebenen Konzentrationsbereichen arbeiten, wobei die sekundäre Desorbtion gegenüber der primären Desorbtion im gleichen oder niedrigeren Konzentrationsbereich stattfindet und angereicherte Lauge auch für die primäre Desorbtion liefert, und/oder

• die Druckstufen der primären Desorbtion zu denen der sekundären Desorbtion laugeseitig parallel und dampfseitig hintereinander geschaltet sind, und/oder

• die Absorbtion in dampfseitig hintereinander und lauge- und wasserseitig parallel geschalteten Druckstufen durchgeführt wird, indem durch rekuperative Übertragung der Absorbtionswärme an einen Wasserdampfkreisprozess in den Absorbtionsstufen produzierter Dampf, der gegenüber dem Siededruck der Lauge durch höheren Druck gekennzeichnet ist, von der jeweils unter niedrigerem Absorbtionsdruck arbeitenden Stufe in die unter höherem Absorbtionsdruck arbeitende Absorbtionsstufe eingeleitet wird, und/oder

• in der letzten Absorbtionsstufe der Absorbtionsdampf, vor seiner Ableitung in die prozessintegrierte Dampfturbine zum Zwecke der Verrichtung technischer Arbeit, überhitzt wird.

10. Verfahren nach einem der Ansprüche 1 bis 9, wobei die fühlbare Wärme der die Desorbtion und Absorbtion verlassenden Stoffströme, vor deren Speicherung, an die dem Speicher entnommenen und der Desorbtion und Absorbtion zu zuführenden Stoffströme insgesamt oder je Desorbtions- und Absorbtionsstufe getrennt rekuperativ übertragen wird.

11. Verfahren nach einem der Ansprüche 8 bis 10, wobei die prozessintegrierte Dampfturbinenanlage so ausgelegt ist, dass der Abdampf der Turbine das Druckniveau der ersten Absorbtionsstufe hat.

12. Verfahren nach einem der Ansprüche 8 bis 11, wobei

• der für die Beheizung der Desorbtion vorgesehene Dampf der Desorbtion entnommen und vor Einsatz als Heizdampf in der Desorbtion mithilfe von Elektroenergie, insbesondere aus regenerativer Energie, komprimiert wird, und/oder

• der für die Beheizung nicht erforderliche Desorbtionsdampf unter Verrichtung technischer Arbeit entspannt und vorzugsweise bei Umgebungstemperatur kondensiert wird.

13. Verfahren nach einem der Ansprüche 8 bis 12, wobei

• die Dampfbilanz im Absorbtionsprozess ausgeglichen wird durch Desorbtionsdampf aus der Desorbtion, vorzugsweise der primären Desorbtion, oder externen Quellen, und/oder

• die Desorbtionsdämpfe aus der primären Desorbtion nach Kühlung in den Druckstufen der primären Desorbtion oder im überhitzten Zustand direkt den Druckstufen der sekundären Desorbtion als Heizdampf zugeführt und dort kondensiert werden.

14. Verfahren nach einem der Ansprüche 8 bis 13, wobei

• vor jeder Druckstufe der primären Desorbtion die mit der reichen Lauge aus der Druckstufe abgeführt Wärme rekuperativ an die dieser Druckstufe zuzuführende angereichte Lauge übertragen und/oder für die Dampferzeugung genutzt wird, und/oder

• die der sekundären Desorbtion zugeführte arme Lauge vor ihrer Einleitung in die jeweilige Druckstufe durch die fühlbare Wärme des aus diesen Stufen abzuführenden Dampfkondensats und der angereicherten Lauge rekuperativ vorgewärmt wird.

15. System zur Umwandlung und Speicherung von Energie, umfassend einen Wasser-Dampf-Kreisprozess, wie Dampf-Kraft-, Dampf-Heiz- oder Dampf-Heiz-Kraft-Kreisprozess, welcher Dampfkessel (11.2), Entnahme/Gegendruck-Dampfturbinen (11.3), Heiz- und Abdampfkondensatoren (11.5, 11.7) und Wasserspeisepumpen (11.1) umfasst, und

einen Laugekreisprozess umfassend eine Dampf-Desorptions- und eine Dampf-Absorbtionsstufe, wobei beide Kreisprozesse dampfseitig so verbunden sind, dass einerseits der durch Absorbtionswärme in der Dampf-Absorbtionsstufe erzeugte und im Druck erhöhte Dampf vor der Dampfturbine zum Zwecke der Verrichtung technischer Arbeit in den Wasser-Dampf-Kreisprozess eingebunden und andererseits Dampf der Dampfturbine des Wasser-Dampf-Kreisprozesses entnommen und der Dampf-Absorbtionsstufe zugeführt wird, wobei die für die Wiederanreicherung der Lauge erforderliche externe Wärmeenergie für die Dampf-Desorbtionsstufe direkt und/oder über Wärmeträger als fühlbare Wärme und/oder Kondensationswärme bereitgestellt wird, wobei als Lauge Verbindungen, welche die Eigenschaft haben Wasser(dampf) weitgehend reversibel zu absorbieren und zu desorbieren, wie Metallhydroxide oder Metallsalze vorzugsweise in Form wässriger Lösungen, eingesetzt werden, und zwischen Dampf-Absorbtionsstufe und Dampf-Desorbtionsstufe angeordnete Speicher vorgesehen sind, zur Speicherung von Produkten des Laugekreisprozesses (arme, reiche und angereicherte Lauge und Wasser) und deren Wiederzuführung in den Laugekreisprozess,

wobei das System umfasst

• eine Einheit zur Einkopplung von extern gewonnener Energie (12.6, 12.8, 14);
• eine Einheit zur Durchführung eines Laugenkreisprozesses (12) umfassend mindestens einen Desorber (12.1) und mindestens einen Absorber (12.2), die jeweils mehrstufig ausgeführt sein können, für die Desorbtion bzw. Absorbtion von Wasserdampf aus oder in Lauge und einen damit verbundenen Arbeitsmittelspeicher (13) für die Speicherung von armer Lauge (13.2), angereicherter Lauge (13.3) und Wasserdampfkondensat (13.1), der zwischen Desorber und Absorber geschaltet ist und vorzugsweise bei Umgebungsdruck und Umgebungstemperatur oder darüber arbeitet, wobei die jeweiligen Speicher auch räumlich getrennt angeordnet sein können; und
• eine Einheit zur Auskopplung von gespeicherter Energie (11), wobei
• die Einheit zur Einkopplung von extern gewonnener Energie direkt und/oder über ein Wärmeträgersystem zur rekuperativen Wärmeübertragung (12.6, 12.7, 14.4) mit dem mindestens einen Desorber verbunden ist,
• der Absorber zusätzlich mit einer Einrichtung zur Erzeugung von Frischdampf (12.2), insbesondere überhitztem Frischdampf, mittels der anfallenden Absorptionswärme bzw. eines Dampfüberhitzers gekoppelt ist,
• und die Einrichtung zur Erzeugung von Frischdampf mit der Einheit zur Auskopplung von gespeicherter Energie dampfseitig verbunden ist.

**16.** System nach Anspruch 15, wobei es Druckgefäße umfasst, die die Druckdifferenzen zwischen den Desorbtions- und Absorbtionsstufen gegenüber der Umgebung aufnehmen, inseitig mit Wasserdampf beaufschlagt und in diesen die Lauge führenden Teile der Vorrichtung druckentlastet installiert sind.

**Claims**

**1.** Process for the conversion and storage of energy, and the demand-based recovery thereof in power, heating and combined heat and power stations by means of water vapor sorption processes with alkaline solutions, wherein an alkaline solution, preferably sodium hydroxide solution, is cyclically changed in its concentration by time-displaced continuous absorption (B') and desorption (A') of water vapor within predetermined limits, wherein

• the concentration of the alkaline solution (1') is increased under single-stage or multi-stage boiling pressures by supplying external energy (7') via heat carriers (2') in the form of sensible heat or condensation heat recuperatively (8') to these desorption stages (20') and the condensation heat of resulting desorption vapors is also used for heating desorption stages and/or is supplied to external use,
• water vapor (25') is again supplied to the alkaline solution (4', 15', 19') enriched by desorption and the heat released by absorption (24') is recuperatively removed to a heat transfer medium, which evaporates under increased pressure compared to the absorption pressure or whose sensible heat is used in a steam process (32') or in a flash evaporation above absorption pressure for the production of vaporous working medium which performs technical work in an expansion (33'), preferably for the production of electrical energy,
• the products poor (1') and enriched alkaline solution (4') as well as water (11') of the sorption process are stored essentially under ambient pressure separately from one another in a storage (21, 13', 12') and are supplied from there to the desorption and absorption stages (A', B') as required,
• wherein at least a part of the desorption vapor is compressed (5') and thereafter used as heating vapor for the recuperative transfer of heat (6') in the desorption, while the condensation heat (10') of the desorption vapor to be discharged from the process is discharged to the environment or to an in-process heat accumulator or to a heat transfer medium (9').

**2.** Process according to claim 1, wherein the condensation heat of the desorption vapor to be removed from the process is discharged to the environment or to an in-process hot water storage or a pressurized water cycle.

**3.** Process according to claim 1 or 2, wherein the desorption takes place over at least two concentration ranges of the alkaline solution, wherein the sensible heat of the heat transfer medium is used essentially for heating the desorption in the higher concentration range and potentially available condensation heat is used for heating the desorption stages in the lower concentration range.

4. Process according to claim 1, wherein the absorption is carried out, with recuperative transfer of the absorption heat to a heat transfer medium or a steam process, over one or more concentration ranges and over one or more pressure stages in such a way that the live steam produced by isothermal evaporation or flash evaporation is **characterized by** a higher pressure than the absorption pressure.

5. Process according to claim 1 or 4, wherein water vapor produced by absorption heat at elevated pressure is used as absorption vapor in such a way that the vapor pressure in the absorption stages is raised stepwise and the absorption temperature allows the production of live steam at high pressure.

6. Process according to any one of claims 1, 4 and 5, wherein the live steam produced by recuperative transfer of the absorption heat is expanded under performance of technical work and the vapor present thereafter is used as absorption vapor.

7. Process according to one of claims 1 and 4 to 6, wherein the vapor balance of the absorption is closed by external vapor from technical processes and/or from flash evaporation of water from the in-process hot water storage, cooling water or ambient or sea water.

8. Process according to any one of claims 1 to 7, wherein an alkaline solution, preferably sodium hydroxide solution, is integrated into the steam cycles of the power and combined heating and power processes, the concentration of which is cyclically changed by absorption and desorption of water vapor within predetermined limits, wherein

   • a multi-stage desorption process, which increases the concentration of the alkaline solution by direct and/or recuperative supply of sensible heat and/or condensation heat, is installed between a steam generator, a steam turbine and the heat or exhaust steam condensers,
   • a multi-stage absorption process is arranged in parallel with a steam boiler or in place of the steam boiler in the water-steam cycle process, which absorbs steam from the steam turbine in its first stage and thereafter absorbs self-generated steam in the following stages,
   • a product storage for the desorption products, rich, poor and enriched alkaline solution and water, operating at ambient pressure and temperature or above, is placed in the steam cycle process between the desorption and absorption processes.

9. Process according to 8, wherein

   • the desorption of the water vapor from the alkaline solution takes place in two steps, whereby in the primary desorption the sensible heat of the heat carriers used for the desorption, preferably of waste gas or compressed water vapor, is recuperatively transferred to the alkaline solution, while in the secondary desorption the desorption vapor from the primary desorption and from the secondary desorption itself is used for heating the desorption stages operating under pressure steps, and/or
   • the pressure stages of the primary and secondary desorption operate in predetermined concentration ranges, wherein the secondary desorption takes place in the same or lower concentration range compared to the primary desorption and provides enriched alkaline solution also for the primary desorption, and/or
   • the pressure stages of the primary desorption are connected in parallel with those of the secondary desorption on the alkaline side and are connected in series on the vapor side, and/or
   • the absorption is carried out in pressure stages connected in series on the vapor side and connected in parallel on the alkaline and water sides, wherein vapor produced by recuperative transfer of the absorption heat to a water vapor cycle process in the absorption stages, which vapor is **characterized by** higher pressure than the boiling pressure of the alkaline solution, is introduced from the respective stage operating under lower absorption pressure into the absorption stage operating under higher absorption pressure, and/or
   • in the last absorption stage, the absorption vapor is superheated before it is discharged into the in-process steam turbine for the purpose of performing technical work.

10. Process according to one of the claims 1 to 9, wherein the sensible heat of the material flows leaving the desorption and absorption stage is recuperatively transferred, before storage thereof, to the material flows taken from the storage and to be supplied to the desorption and absorption stage as a whole or separately for each desorption and absorption stage.

11. Process according to any one of claims 8 to 10, wherein the in-process steam turbine plant is designed such that the exhaust steam of the turbine has the pressure level of the first absorption stage.

**12.** Process according to any one of claims 8 to 11, wherein

• the vapor intended for heating the desorption is taken from the desorption and compressed before use as heating vapor in the desorption by means of electrical energy, in particular from renewable energy, and/or
• the desorption vapor not required for heating is expanded under performance of technical work and is preferably condensed at ambient temperature.

**13.** Process according to any one of claims 8 to 12, wherein

• the vapor balance in the absorption process is balanced by desorption vapor from the desorption, preferably the primary desorption, or external sources, and/or
• the desorption vapors from the primary desorption, after cooling in the pressure stages of the primary desorption or in the superheated state, are supplied directly to the pressure stages of the secondary desorption as heating vapor and are condensed there.

**14.** Process according to one of claims 8 to 13, wherein

• before each pressure stage of the primary desorption, the heat removed with the rich alkaline solution from the pressure stage is transferred recuperatively to the enriched alkaline solution to be supplied to this pressure stage and/or is used for steam generation, and/or
• the poor alkaline solution supplied to the secondary desorption is recuperatively preheated by the sensible heat of the vapor condensate to be discharged from these stages and of the enriched alkaline solution before its introduction into the respective pressure stage.

**15.** Energy conversion and storage system comprising a water-steam cycle process, such as steam-power, steam-heat or steam-heat-power cycle process, which comprises steam boilers (11.2), extraction/backpressure steam turbines (11.3), heat and exhaust steam condensers (11.5, 11.7) and water feed pumps (11.1), and

an alkaline solution cycle process comprising a vapor desorption stage and a vapor absorption stage, wherein the two cycle processes are connected on the vapor side in such a way that, on the one hand, the vapor generated by absorption heat in the vapor absorption stage and increased in pressure is incorporated into the water-steam cycle process upstream of the steam turbine for the purpose of performing technical work and, on the other hand, vapor is extracted from the steam turbine of the water-steam cycle process and fed to the vapor absorption stage, wherein the external heat energy required for the re-enrichment of the alkaline solution is provided for the vapor desorption stage directly and/or via heat transfer media as sensible heat and/or condensation heat,
wherein compounds which have the property of absorbing and desorbing water (vapor) in a largely reversible manner, such as metal hydroxides or metal salts preferably in the form of aqueous solutions, are used as alkaline solution, and storage means arranged between the vapor absorption stage and the vapor desorption stage are provided for storing products of the alkaline solution cycle process (poor, rich and enriched alkaline solution and water) and for feeding said products back into the alkaline solution cycle process,
wherein the system comprises

• a unit for introducing externally generated energy (12.6, 12.8, 14);
• a unit for carrying out an alkaline solution cycle process (12) comprising at least one desorber (12.1) and at least one absorber (12.2), which can each be of a multi-stage design, for the desorption or absorption of water vapor from or into alkaline solution and a working medium storage (13) connected thereto for the storage of poor alkaline solution (13. 2), enriched alkaline solution (13.3) and water vapor condensate (13.1), which is arranged between desorber and absorber and preferably is operating at ambient pressure and ambient temperature or above, wherein the respective storages may also be arranged spatially separated; and
• a unit for output of stored energy (11), wherein
• the unit for introducing externally generated energy is connected to the at least one desorber directly and/or via a heat transfer system for recuperative heat transfer (12.6, 12.7, 14.4),
• the absorber is additionally connected to a device for generating live steam (12.2), in particular superheated live steam, by means of the resulting absorption heat or a steam superheater, respectively,
• and the device for generating live steam is connected on the vapor side to the unit for output of stored energy.

**16.** System according to claim 15, wherein the system comprises pressure vessels, which absorb the pressure differences between the desorption and absorption stages with respect to the environment, are charged on the inside with water vapor and in which the parts of the device carrying the alkaline solution are installed in a pressure-relieved manner.

**Revendications**

**1.** Procédé de conversion et d'accumulation d'énergie et de sa récupération selon les besoins dans des centrales électriques, thermiques et thermiques-électriques par des processus de sorption de vapeur d'eau ou avec des solutions alcalines, dans lequel une solution alcaline, de préférence une solution de soude, est modifiée d'une manière cyclique dans sa concentration par absorption (B') et désorption (A') continues, décalées dans le temps, de vapeur d'eau dans des limites prédéfinies, tandis que

- la concentration de la solution alcaline (1') est accrue à des pressions d'ébullition à un ou plusieurs niveaux, tandis qu'une énergie externe (7') est amenée par récupération (8') à ces niveaux de désorption (20') par des fluides caloporteurs (2') sous forme de chaleur ou de chaleur de condensation sensible et la chaleur de condensation des vapeurs de désorption en résultant est également utilisée pour chauffer des niveaux de désorption et/ou est fournie à une utilisation externe,
- la vapeur d'eau (25') est amenée de nouveau à la solution alcaline (4', 15', 19') enrichie par désorption et la chaleur dégagée par absorption (24') est évacuée par récupération vers un fluide caloporteur qui est évaporé à une pression accrue par rapport à la pression d'absorption ou sa chaleur sensible est utilisée dans un processus de vapeur (32') ou dans une évaporation instantanée par pression d'absorption pour la production de fluides actifs à l'état de vapeur de sorte que se réalise dans une expansion (33') un travail technique, de préférence pour la production d'énergie électrique,
- les produits solution alcaline pauvre (1') et enrichie (4') ainsi que l'eau (11') du processus de sorption sont stockés dans un réservoir (21, 13', 12'), en étant séparés les uns des autres, principalement à pression ambiante et de là sont amenés selon les besoins aux niveaux de désorption et d'absorption (A', B'),
- dans lequel au moins une partie de la vapeur de désorption est comprimée (5') et utilisée ensuite comme vapeur de chauffage pour la transmission de chaleur (6') par récupération dans la désorption, pendant que la chaleur de condensation (10') de la vapeur de désorption devant être évacuée du processus est évacuée dans l'environnement ou un accumulateur de chaleur interne au processus ou un fluide caloporteur (9').

**2.** Procédé selon la revendication 1, dans lequel la chaleur de condensation de la vapeur de désorption devant être évacuée du processus est évacuée dans l'environnement ou un réservoir à eau chaude interne au processus, ou un circuit d'eau sous pression.

**3.** Procédé selon la revendication 1 ou 2, dans lequel la désorption se fait au moins sur deux fourchettes de concentration de la solution alcaline, dans lequel la chaleur sensible du fluide caloporteur est principalement utilisée pour chauffer la désorption dans une fourchette de concentration supérieure et la chaleur de condensation se trouvant éventuellement à disposition est utilisé pour chauffer les niveaux de désorption dans une fourchette de concentration inférieure.

**4.** Procédé selon la revendication 1, dans lequel l'absorption a lieu lors de la transmission par récupération de la chaleur d'absorption à un fluide caloporteur ou un processus de vapeur sur une ou plusieurs fourchettes de concentration et sur un ou plusieurs niveaux de pression de sorte que la vapeur vive produite par évaporation isotherme ou évaporation instantanée est **caractérisée par** une pression supérieure par rapport à la pression d'absorption.

**5.** Procédé selon la revendication 1 ou 4, dans lequel de la vapeur d'eau produite par de la chaleur d'absorption à une pression supérieure est utilisée comme vapeur d'absorption de sorte que la pression de vapeur est progressivement relevée dans les niveaux d'absorption et la température d'absorption permet la production de vapeur vive à haute pression.

**6.** Procédé selon l'une des revendications 1, 4 et 5, dans lequel la vapeur vive produite par transmission, par récupération, de la chaleur d'absorption est détendue en réalisant un travail technique et la vapeur présente ensuite est utilisée comme vapeur d'absorption.

**7.** Procédé selon l'une des revendications 1 et 4 à 6, dans lequel le bilan vapeur de l'absorption est clos par de la vapeur externe provenant de processus techniques et/ou de l'évaporation instantanée d'eau provenant du réservoir à eau chaude interne au processus, d'eau de refroidissement ou d'eau environnante respectivement d'eau de mer.

8. Procédé selon l'une des revendications 1 à 7, dans lequel une solution alcaline, de préférence une solution de soude, est intégrée dans les circuits fermés de vapeur des processus d'énergie et de chauffage - énergie, dont la concentration est modifiée d'une manière cyclique par absorption et désorption de vapeur d'eau dans des limites prédéfinies, tandis

   ▪ qu'un processus de désorption à plusieurs niveaux, qui accroit la concentration de la solution alcaline lors de l'amenée directe et/ou par récupération de chaleur sensible et/ou de chaleur de condensation, est mis en place entre chaudière à vapeur, turbine à vapeur et les condenseurs de chauffage ou d'évaporation,
   ▪ un processus d'absorption à plusieurs niveaux est coordonné parallèlement à la chaudière à vapeur ou à sa place dans le cycle fermé eau - vapeur, lequel absorbe à son premier niveau de la vapeur provenant de la turbine à vapeur et ensuite, aux niveaux suivants, de la vapeur auto-produite,
   ▪ dans le cycle fermé de vapeur, un réservoir de produit fonctionnant à pression et température ambiantes ou au-dessus de celles-ci, pour les produits de désorption, la solution alcaline riche, pauvre et enrichie ainsi que l'eau, est disposé entre le processus de désorption et le processus d'absorption.

9. Procédé selon la revendication 8, dans lequel

   ▪ la désorption de la vapeur d'eau provenant de la solution alcaline a lieu en deux étapes, dans lequel dans la désorption primaire, la chaleur sensible des fluides caloporteurs mis en place pour la désorption, de préférence de gaz d'échappement ou de vapeur d'eau comprimée, est transmise par récupération à la solution alcaline, pendant que dans la désorption secondaire, la vapeur de désorption provenant de la désorption primaire et de la désorption secondaire est elle-même utilisée pour chauffer les niveaux de désorption fonctionnant à des pressions échelonnées, et/ou
   ▪ les niveaux de pression de la désorption primaire et secondaire fonctionnent dans des fourchettes de concentration prédéfinies, la désorption secondaire ayant lieu dans une fourchette de concentration similaire ou inférieure par rapport à la désorption primaire et fournissant une solution alcaline enrichie également pour la désorption primaire, et / ou
   ▪ les niveaux de pression de la désorption primaire sont commutés parallèlement à ceux de la désorption secondaire côté solution alcaline et les uns derrière les autres côté vapeur, et / ou
   ▪ l'absorption est effectuée à des niveaux de pression commutés les uns derrière les autres côté vapeur et parallèlement côté solution alcaline et eau, tandis que de la vapeur produite par transmission par récupération de la chaleur d'absorption à un cycle fermé de vapeur d'eau dans les niveaux d'absorption, qui est **caractérisée par** une pression supérieure par rapport à la pression d'ébullition de la solution alcaline, passe du niveau fonctionnant à chaque fois à une pression d'absorption inférieure au niveau d'absorption fonctionnant à une pression d'absorption supérieure, et/ou
   ▪ au dernier niveau d'absorption, la vapeur d'absorption avant d'être dérivée dans la turbine à vapeur intégrée au processus aux fins de réalisation d'un travail technique, est surchauffée.

10. Procédé selon l'une des revendications 1 à 9, dans lequel la chaleur sensible des flux de matières quittant la désorption et l'absorption, avant son accumulation, est transmise par récupération aux flux de matières soutirées du réservoir et devant être amenés à la désorption et à l'absorption globalement ou séparément par niveau de désorption et d'absorption.

11. Procédé selon l'une des revendications 8 à 10, dans lequel l'installation de turbine à vapeur intégrée au processus est conçue de sorte que la vapeur d'échappement de la turbine a le niveau de pression du premier niveau d'absorption.

12. Procédé selon l'une des revendications 8 à 11, dans lequel

   ▪ la vapeur prévue pour le chauffage de la désorption est tirée de la désorption et est comprimée avant utilisation comme vapeur de chauffage dans la désorption à l'aide d'énergie électrique, notamment d'énergie régénérative, et / ou
   ▪ la vapeur de désorption non nécessaire pour le chauffage est détendue en réalisant un travail technique et est condensée, de préférence, à température ambiante.

13. Procédé selon l'une des revendications 8 à 12, dans lequel

- le bilan vapeur dans le processus d'absorption est compensé par de la vapeur de désorption provenant de la désorption, de préférence, de la désorption primaire, ou de sources externes, et/ou
- les vapeurs de désorption provenant de la désorption primaire après refroidissement dans les niveaux de pression de la désorption primaire ou à l'état de surchauffe sont amenées comme vapeur de chauffage directement aux niveaux de pression de la désorption secondaire et y sont condensées.

14. Procédé selon l'une des revendications 8 à 13, dans lequel

- avant chaque niveau de pression de la désorption primaire, la chaleur évacuée du niveau de pression avec la solution alcaline riche est transmise par récupération à la solution alcaline enrichie devant être amenée à ce niveau de pression et/ou est utilisée pour la production de vapeur, et / ou
- la solution alcaline pauvre amenée à la désorption secondaire est préchauffée par récupération avant son introduction dans le niveau de pression respectif par la chaleur sensible du condensat de vapeur devant être évacué de ces niveaux et de la solution alcaline enrichie.

15. Système de conversion et d'accumulation d'énergie, comprenant un cycle fermé eau - vapeur, comme un cycle fermé vapeur - énergie, vapeur - chauffage ou vapeur -chauffage - énergie, lequel comprend une chaudière à vapeur (11.2), des turbines à vapeur à soutirage / contre-pression (11.3), des condenseurs de chauffage et d'évaporation (11.5, 11.7) et des pompes d'alimentation en eau (11.1), et

un cycle fermé de solution alcaline comprenant un niveau de désorption de vapeur et un niveau d'absorption de vapeur,
dans lequel les deux cycles fermés sont reliés côté vapeur de sorte que, d'une part, la vapeur produite par la chaleur d'absorption au niveau d'absorption de vapeur et accrue en pression avant la turbine à vapeur est intégrée aux fins de réalisation d'un travail technique dans le cycle fermé eau - vapeur et, d'autre part, la vapeur est prélevée de la turbine à vapeur du cycle fermé eau - vapeur et est amenée au niveau d'absorption de vapeur, dans lequel l'énergie thermique externe nécessaire pour le ré-enrichissement de la solution alcaline est mise à disposition pour le niveau de désorption de vapeur directement et/ou par fluide caloporteur comme chaleur sensible et/ou chaleur de condensation, dans lequel sont utilisées comme solution alcaline des combinaisons, qui ont la propriété d'absorber ou de désorber d'une manière largement réversible de la (vapeur) d'eau, telles que des hydroxydes métalliques ou des sels métalliques de préférence, sous forme de solutions aqueuses, et des réservoirs disposés entre le niveau d'absorption de vapeur et le niveau de désorption de vapeur sont prévus, pour le stockage de produits du cycle fermé de solution alcaline (solution alcaline pauvre, riche et enrichie et eau) et leur réintroduction dans le cycle fermé de solution alcaline,

dans lequel le système comprend

- une unité de couplage d'énergie obtenue d'une manière externe (12.6, 12.8, 14) ;
- une unité d'exécution d'un cycle fermé de solution alcaline (12) comprenant au moins un désorbeur (12.1) et au moins un absorbeur (12.2) qui peuvent être réalisés à chaque fois en plusieurs étapes, pour la désorption ou l'absorption de vapeur d'eau provenant de la solution alcaline ou s'y trouvant et un réservoir de fluides de travail (13) y étant relié pour le stockage de solution alcaline pauvre (13.2), de solution alcaline enrichie (13.3) et de condensat de vapeur d'eau (13.1), qui est commuté entre le désorbeur et l'absorbeur et qui fonctionne, de préférence, à pression ambiante et température ambiante ou supérieures à celles-ci, dans lequel les réservoirs respectifs peuvent aussi être disposés séparément dans l'espace ; et
- une unité de découplage de l'énergie accumulée (11), dans lequel
- l'unité de couplage d'énergie obtenue d'une manière externe est reliée directement et /ou par un système de fluides caloporteurs pour la transmission de chaleur (12.6, 12.7, 14.4) par récupération avec le au moins un désorbeur,
- l'absorbeur est couplé, en outre, à un dispositif de production de vapeur vive (12.2), plus particulièrement de vapeur vive surchauffée, au moyen de la chaleur d'absorption en résultant ou d'un surchauffeur de vapeur,
- et le dispositif de production de vapeur vive est relié côté vapeur à l'unité de découplage d'énergie accumulée.

16. Système selon la revendication 15, lequel comprend des récipients sous pression qui absorbent les différences de pression entre les niveaux de désorption et d'absorption par rapport à l'environnement, de la vapeur d'eau étant appliquée à l'intérieur, et dans ceux-ci les parties du dispositif conduisant la solution alcaline sont installées en étant dépressurisées.

Figur 1

Figur 2

Figur 3

Figur 4

Figur 5

Figur 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010046584 A1
- EP 2007005706 W
- EP 2067942 A
- DE 24993
- DE 851883, von Moritz Honigmann